# EUROPEAN PATENT APPLICATION

(11) **EP 4 746 456 A1**
(43) Date of publication of application: **20.05.2026**
(21) Application number: 24853509.8
(22) Date of filing: 22.07.2024
(51) Int. Cl.: H04W 4/24, H04L 12/14, H04M 15/00

(54) **CHARGING ANOMALY PROCESSING METHOD AND RELATED DEVICE**

(30) Priority: 17.08.2023 CN 202311045351
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Isarpatent
(86) International application number: PCT/CN2024/106741
(87) International publication number: WO 2025/036097

(57) **Abstract**

This application relates to the charging field, and specifically, relates to a charging anomaly processing method and a related device. The method includes: A first R-CHF entity receives a first charging request sent by a CTF entity, and performs charging anomaly processing when detecting that an anomaly occurs in interaction with a target CHF entity related to the first charging request. The target CHF entity is a primary CHF entity or a second R-CHF entity. The primary CHF entity provides online quota management and charging data record generation, and the second R-CHF entity is a CHF entity that provides a relay for the CTF entity and the primary CHF entity before the first R-CHF entity serves as a relay CHF entity. When an anomaly occurs in the primary CHF entity or an anomaly occurs in the second R-CHF entity, the first R-CHF entity performs charging anomaly processing, to avoid a case in which charging cannot be normally performed.

## Description

This application claims priority to Chinese Patent Application No. 202311045351.X, filed with the China National Intellectual Property Administration on August 17, 2023 and entitled "CHARGING ANOMALY PROCESSING METHOD AND RELATED DEVICE", which is incorporated herein by reference in its entirety.

### TECHNICAL FIELD

This application relates to the charging field, and in particular, to a charging anomaly processing method and a related device.

### BACKGROUND

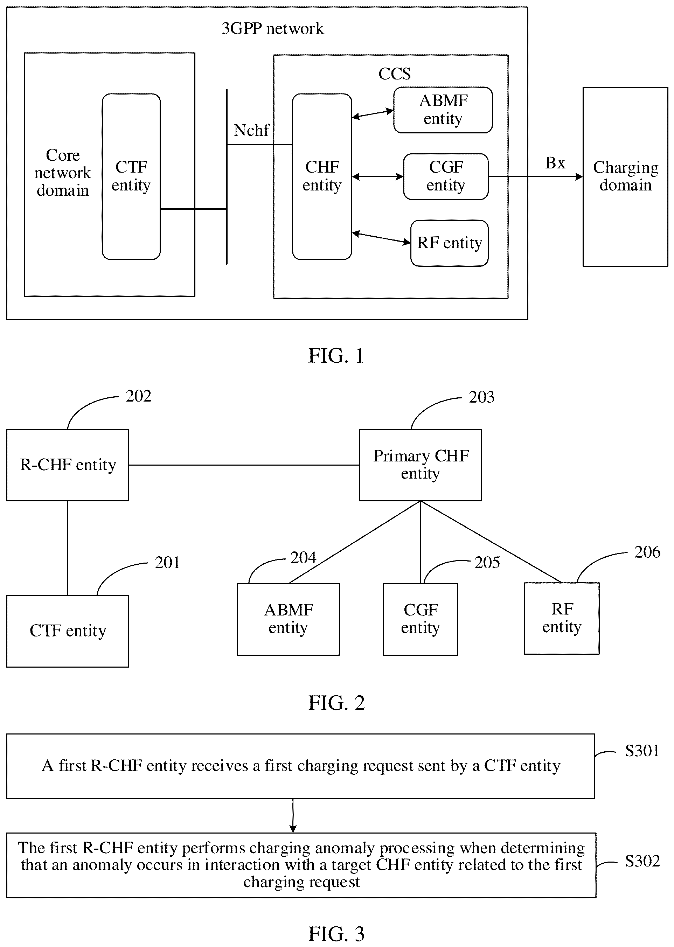

In a 5G architecture, a charging architecture is an architecture that integrates online charging and one-time event offline charging. As shown in FIG. 1, a converged charging system (converged charging system, CCS) is a charging system that integrates online charging and offline one-time event charging, and is connected to a charging trigger function (charging trigger function, CTF) entity via an Nchf interface. The CCS receives a charging request sent by the CTF entity. The charging request includes quota application information of the CTF, usage information collected by the CTF, and the like. The CCS performs charging processing based on the charging request and related information of a user service, such as a user type, customer information, an account balance, a service trustlist/blocklist, a change trend of the account balance, and a remaining validity period of a package, and sends a charging processing result to the CTF entity, so that the CTF entity adjusts a charging operation performed on the user service.

The CCS includes a charging function (charging function, CHF) entity, an account balance management function (account balance management function, ABMF) entity, a charging gateway function (charging gateway function, CGF) entity, and a rating function (rating function, RF) entity.

The CHF entity includes an online charging function (online charging function, OCF) entity and a charging data function (charging data function, CDF) entity. The CDF function is responsible for receiving charging information from the CTF entity or a charging enablement function(charging enablement function, CEF) entity via the Nchf interface, generating a charging data record CDR (charging data record, CDR), and transferring the CDR to the CGF entity. Finally, the CGF entity creates a CDR file, and forwards the charging data record file to a related processing device in a charging domain. The OCF function, serving as a quota control node for online charging, provides a quota management function, and performs online charging quota processing for various services of a user. The RF entity is responsible for rating charging information provided by the OCF entity. The RF can perform processing for various charging types, such as data amount charging, session/connection time charging, and service event charging. The CGF entity receives the CDR transferred by the CHF entity, completes functions such as sorting, consolidation, filtering, decoding, routing, and distribution of the charging data record, and transfers the charging data record to the charging domain via a Bx interface.

In a charging system including the CTF entity, a relay CHF (relay RCH, R-CHF) entity, and a primary CHF entity, if an anomaly occurs in the primary CHF entity, or an anomaly occurs in the R-CHF entity, charging cannot be normally performed.

### SUMMARY

Embodiments of this application provide a charging anomaly method and a related device. Embodiments of this application are used, to avoid a case in which charging cannot be normally performed because an anomaly occurs in a primary CHF entity or an anomaly occurs in an R-CHF entity.

According to a first aspect, an embodiment of this application provides a method. The method is applied to a first R-CHF entity. The method includes:

The first R-CHF entity receives a first charging request sent by a CTF entity, and performs charging anomaly processing when detecting that an anomaly occurs in interaction with a target CHF entity related to the first charging request.

The target CHF entity is a primary CHF entity or a second R-CHF entity. The primary CHF entity provides online quota management and charging data record generation. The second R-CHF entity is a CHF entity that provides a relay for the CTF entity and the primary CHF entity before the first R-CHF entity serves as a relay CHF entity.

When an anomaly occurs in the primary CHF entity or an anomaly occurs in the second R-CHF entity, the first R-CHF entity performs charging anomaly processing, to avoid a case in which charging cannot be normally performed.

With reference to the first aspect, in a possible implementation, the target CHF entity is the primary CHF entity, the first charging request is a first charging resource creation request, and is used to request to create a first charging resource for charging interaction between the CTF entity and the first R-CHF entity, and that the first R-CHF entity performs charging anomaly processing includes:

The first R-CHF entity generates the first charging resource for charging interaction between the CTF entity and the first R-CHF entity; the first R-CHF entity caches charging information in the first charging request; and the first R-CHF entity sends a first charging response message in response to the first charging request to the CTF entity, where the first charging response message includes an identifier of the first charging resource.

It should be noted that, the charging information cached in the first R-CHF entity is charging information that needs to be provided for the primary CHF entity.

The first charging response message is sent to the CTF entity, so that the CTF entity determines to learn that a session with the first R-CHF entity has been established.

With reference to the first aspect, in a possible implementation, if the first charging request includes a quota request, the first response message includes quota suspension indication information or a granted quota, and the quota suspension indication information indicates the CTF entity to continue a service based on a quota suspension management mode.

The quota suspension indication information or the granted quota is sent to the CTF entity, so that charging processing is normally performed.

With reference to the first aspect, in a possible implementation, the first charging response message includes the granted quota, usage of the granted quota is received from the CTF entity, and the cached charging information includes a quota suspension identifier corresponding to the usage of the granted quota.

With reference to the first aspect, in a possible implementation, that the first R-CHF entity caches the charging information in the first charging request includes:

The first R-CHF entity writes the charging information in the first charging request into a first R-CHF charging data record or stores the charging information in the first charging request in the first charging resource.

With reference to the first aspect, in a possible implementation, caching the charging information in the first charging request includes:
writing the charging information in the first charging request into the first R-CHF charging data record or storing the charging information in the first charging request in the first charging resource.

The charging information is cached, so that the charging information is provided for the primary CHF entity after interaction with the primary CHF entity is normal, to implement normal charging.

With reference to the first aspect, in a possible implementation, the method in this embodiment further includes:
when detecting that interaction with the target CHF entity related to the first charging request is normal, sending a second charging request to the primary CHF entity, where the second charging request is a second charging resource creation request, and is used to request to create a second charging resource for charging interaction between the first R-CHF entity and the primary CHF entity, or the second charging request is a third charging resource update request or a third charging resource release request, and is used to request to update or release a third charging resource between the CTF entity and the primary CHF entity.

With reference to the first aspect, in a possible implementation, the second charging request carries the cached charging information.

In an example, the cached charging information includes the charging information in the first charging request. In another example, the cached charging information includes the charging information in the first charging request and a corresponding quota suspension identifier.

With reference to the first aspect, in a possible implementation, the method in this embodiment further includes:
sending the first R-CHF charging data record to the primary CHF entity when detecting that interaction with the target CHF entity related to the first charging request is normal. The target CHF entity related to the first charging request is the primary CHF entity.

With reference to the first aspect, in a possible implementation, the method in this embodiment further includes:
before generating the second charging request, sending a notification message to the CTF entity, where the notification message indicates the CTF entity to restore quota management; and receiving a third charging request sent by the CTF entity, where the third charging request carries a quota request and usage for restoring quota management, and the second charging request includes the quota request and the usage that are carried in the third charging request.

It should be noted that, the usage herein is usage of a suspended quota or usage of the granted quota.

With reference to the first aspect, in a possible implementation, the target CHF is the primary CHF entity corresponding to the first charging request, the first charging request is a second charging resource update request or a second charging resource release request, and is used to request to update or release a second charging resource for charging interaction between the first R-CHF entity and the CTF entity, and that the first R-CHF entity performs charging anomaly processing includes:
caching charging information in the first charging request; and sending a first charging response message in response to the first charging request to the CTF entity.

With reference to the first aspect, in a possible implementation, if the first charging request includes a quota request, the first response message includes quota suspension indication information or a granted quota, and the quota suspension indication information indicates the CTF entity to continue a service based on a quota suspension management mode.

With reference to the first aspect, in a possible implementation, the cached charging information includes first charging information and a corresponding quota consumption identifier, or second charging information and a corresponding quota suspension identifier, the first charging information is charging information that uses an available quota granted by the primary CHF entity in the charging information, and second charging information is charging information that does not use an available quota granted by the primary CHF entity in the charging information.

With reference to the first aspect, in a possible implementation, caching the charging information in the first charging request includes:
writing the first charging information and the corresponding quota consumption identifier, or the second charging information and the corresponding quota suspension identifier into a first R-CHF charging data record or storing the first charging information and the corresponding quota consumption identifier, or the second charging information and the corresponding quota suspension identifier in the first charging resource.

With reference to the first aspect, in a possible implementation, the method in this embodiment further includes:
when detecting that interaction with the target CHF related to the first charging request is normal, sending a second charging request to the primary CHF entity, where the second charging request is a second charging resource update request or a second charging resource release request, and is used to request to update or release a second charging resource for charging interaction between the first R-CHF entity and the primary CHF entity.

With reference to the first aspect, in a possible implementation, the method in this embodiment further includes:
sending the first R-CHF charging data record to the primary CHF entity when detecting that interaction with the target CHF related to the first charging request is normal.

With reference to the first aspect, in a possible implementation, if the charging information and the corresponding quota suspension identifier are stored in the first charging resource, the second charging request carries the charging information and the corresponding quota suspension identifier or the corresponding quota consumption identifier.

With reference to the first aspect, in a possible implementation, the method in this embodiment further includes:
before generating the second charging request, sending a notification message to the CTF entity, where the notification message indicates the CTF entity to restore quota management;
and receiving a third charging request sent by the CTF entity, where the third charging request carries a quota request and usage for restoring quota management, and the second charging request includes the quota request and the usage that are carried in the third charging request.

It should be noted that, the usage herein is usage of a suspended quota or usage of the granted quota.

With reference to the first aspect, in a possible implementation, the target CHF entity is the primary CHF entity corresponding to the first charging request, the first charging request is a one-time event charging request for online direct deduction or offline one-time event charging, and the performing charging anomaly processing includes:
caching charging information in the first charging request; and sending a first charging response message in response to the first charging request to the CTF entity.

With reference to the first aspect, in a possible implementation, the method in this embodiment further includes:
writing the charging information and corresponding online direct deduction indication information or corresponding offline one-time event charging indication information into the first R-CHF charging data record; and
sending the first R-CHF charging data record to the primary CHF entity when detecting that interaction with the target CHF related to the first charging request is normal.

With reference to the first aspect, in a possible implementation, the method in this embodiment further includes:
storing the charging information in the first charging request and corresponding online direct deduction indication information or corresponding offline one-time event charging indication information in a first charging resource; and
sending the second charging request to the primary CHF entity when detecting that interaction with the target CHF related to the first charging request is normal, where the second charging request is a one-time event charging request, and the second charging request carries the charging information and the corresponding online direct deduction indication information or the corresponding offline one-time event charging indication information.

With reference to the first aspect, in a possible implementation, the target CHF entity is the second R-CHF entity, and the second R-CHF entity is a CHF entity that provides a relay for the CTF entity and the primary CHF entity before the first R-CHF entity serves as a relay, and the first charging request is a first charging resource update request or a first charging resource release request, and is used to request to update or release a first charging resource for charging interaction between the second R-CHF entity and the CTF entity, and the performing charging anomaly processing includes:
generating a fourth charging resource between the CTF entity and the first R-CHF entity based on the first charging request, and using an identifier of the first charging resource as an identifier of the fourth charging resource; generating a second charging request based on the first charging request, and sending the second charging request to the primary CHF entity, where the second charging request is used to request to create a second charging resource for charging interaction between the first R-CHF entity and the primary CHF entity, and the second charging request carries an identifier of the third charging resource; receiving a second charging response message in response to the second charging request from the primary CHF entity, where the second charging response message carries an identifier of the second charging resource; and generating, based on the second charging response message, a first charging response message in response to the first charging request, and sending the first charging response message to the CTF entity.

According to a second aspect, an embodiment of this application provides another charging anomaly processing method. The method is applied to a primary CHF entity. The primary CHF entity provides online quota management and charging data record generation. The method includes:
receiving related charging information cached in a first R-CHF entity, where the cached related charging information is carried in a charging data record or a charging message, and the cached related charging information includes charging information and a corresponding quota suspension identifier or a corresponding quota consumption identifier; and performing charging processing based on the quota suspension identifier or the quota consumption identifier.

With reference to the second aspect, in a possible implementation, performing charging processing based on the quota suspension identifier or the quota consumption identifier includes:
directly deducting service usage in the charging information from an account balance corresponding to a charging resource of the primary CHF entity; and
the method in this embodiment further includes:
   if the cached charging information has the corresponding quota consumption identifier, directly deducting the service usage in the charging information from an account corresponding to a first charging resource, and simultaneously releasing a locked account balance; or if the cached charging information includes charging information without quota management, writing the charging information without quota management into a primary CHF charging data record.

According to a third aspect, an embodiment of this application provides a first R-CHF entity. The first R-CHF entity includes a transceiver unit and a processing unit.

The transceiver unit is configured to receive a first charging request sent by a CTF entity.

The processing unit is configured to detect that an anomaly occurs in interaction with a target CHF entity related to the first charging request, and perform charging anomaly processing.

The target CHF entity is a primary CHF entity or a second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

With reference to the third aspect, in a possible implementation, the target CHF entity is a primary CHF entity corresponding to the first charging request, the first charging request is a charging resource creation request for creating a converged charging session, and is used to request to create a charging interaction session between the CTF entity and the first R-CHF entity; and the processing unit is specifically configured to:
generate a first charging resource for charging interaction between the CTF entity and the first R-CHF entity; and cache charging information in the first charging request; and
the transceiver unit is further configured to send a first charging response message in response to the first charging request to the CTF entity, where the first charging response message includes an identifier of the first charging resource.

With reference to the third aspect, in a possible implementation, if the first charging request includes a quota request, the first response message includes quota suspension indication information or a granted quota, and the quota suspension indication information indicates the CTF entity to continue a service based on a quota suspension management mode.

With reference to the third aspect, in a possible implementation, the first charging response message includes the granted quota, usage of the granted quota is received from the CTF entity, and the cached charging information includes a quota suspension identifier corresponding to the usage of the granted quota.

With reference to the third aspect, in a possible implementation, in an aspect of caching the charging information in the first charging request, the processing unit is specifically configured to:
write the charging information in the first charging request into a first R-CHF charging data record or store the charging information in the first charging request in the first charging resource.

With reference to the third aspect, in a possible implementation, the transceiver unit is further configured to:
when detecting that interaction with the target CHF entity related to the first charging request is normal, send a second charging request to the primary CHF entity, where the second charging request is a second charging resource creation request, and is used to request to create a second charging resource for charging interaction between the first R-CHF entity and the primary CHF entity, or the second charging request is a third charging resource update request or a third charging resource release request, and is used to request to update or release a third charging resource for charging interaction between the CTF and the primary CHF entity.

With reference to the third aspect, in a possible implementation, the second charging request carries the cached charging information.

Optionally, the cached charging information includes charging information, or includes charging information and a corresponding quota suspension identifier.

With reference to the third aspect, in a possible implementation, the transceiver unit is further configured to:
send the first R-CHF charging data record to the primary CHF entity when the processing unit detects that interaction with the target CHF entity related to the first charging request is normal. The target CHF entity related to the first charging request is the primary CHF entity.

With reference to the third aspect, in a possible implementation,
the transceiver unit is further configured to: before generating the second charging request, send a notification message to the CTF entity, where the notification message indicates the CTF entity to restore quota management; and receive a third charging request sent by the CTF entity, where the third charging request carries a quota request and usage for restoring quota management, and the second charging request includes the quota request and the usage that are carried in the third charging request.

With reference to the third aspect, in a possible implementation, the target CHF is the primary CHF entity corresponding to the first charging request, the first charging request is a first charging resource update request or a first charging resource release request, and is used to request to update or release the first charging resource for charging interaction between the first R-CHF entity and the CTF entity, and the processing unit is specifically configured to cache the charging information in the first charging request; and
the transceiver unit is further configured to send the first charging response message in response to the first charging request to the CTF entity.

With reference to the third aspect, in a possible implementation, if the first charging request includes a quota request, the first response message includes quota suspension indication information or a granted quota, and the quota suspension indication information indicates the CTF entity to continue a service based on a quota suspension management mode.

With reference to the third aspect, in a possible implementation, the cached charging information includes first charging information and a corresponding quota consumption identifier, or second charging information and a corresponding quota suspension identifier, the first charging information is charging information that uses an available quota granted by the primary CHF entity in the charging information, and the second charging information is charging information that does not use an available quota granted by the primary CHF entity in the charging information.

With reference to the third aspect, in a possible implementation, in an aspect of caching the charging information in the first charging request, the processing unit is further configured to:
write the first charging information and the corresponding quota consumption identifier, or the second charging information and the corresponding quota suspension identifier into a first R-CHF charging data record or store the first charging information and the corresponding quota consumption identifier, or the second charging information and the corresponding quota suspension identifier in the first charging resource.

With reference to the third aspect, in a possible implementation, the transceiver unit is further configured to:
when detecting that interaction with the target CHF related to the first charging request is normal, send a second charging request to the primary CHF entity, where the second charging request is a second charging resource update request or a second charging resource release request, and is used to request to update or release a second charging resource for charging interaction between the first R-CHF entity and the primary CHF entity.

With reference to the third aspect, in a possible implementation, the transceiver unit is further configured to:
send the first R-CHF charging data record to the primary CHF entity when the processing unit detects that interaction with the target CHF related to the first charging request is normal.

With reference to the third aspect, in a possible implementation, the second charging request carries the charging information and the corresponding quota suspension identifier or the corresponding quota consumption identifier.

With reference to the third aspect, in a possible implementation, the transceiver unit is further configured to:
before generating the second charging request, send a notification message to the CTF entity, where the notification message indicates the CTF entity to restore quota management; and receive a third charging request sent by the CTF entity, where the third charging request carries a quota request and usage for restoring quota management, and the second charging request includes the quota request and the usage that are carried in the third charging request.

With reference to the third aspect, in a possible implementation, the target CHF entity is the primary CHF entity corresponding to the first charging request, the first charging request is a one-time event charging request for online direct deduction or offline one-time event charging, and the processing unit is further configured to cache the charging information in the first charging request; and
the transceiver unit is further configured to send the first charging response message in response to the first charging request to the CTF entity.

With reference to the third aspect, in a possible implementation, in an aspect of caching the charging information in the first charging request, the processing unit is specifically configured to: write the charging information and corresponding online direct deduction indication information or corresponding offline one-time event charging indication information into the first R-CHF charging data record; and
the transceiver unit is further configured to send the first R-CHF charging data record to the primary CHF entity when detecting that interaction with the target CHF related to the first charging request is normal.

With reference to the third aspect, in a possible implementation, the processing unit is specifically configured to:
store the charging information in the first charging request and corresponding online direct deduction indication information or corresponding offline one-time event charging indication information in a first charging resource; and
generate the second charging request when detecting that interaction with the target CHF related to the first charging request is normal, where the second charging request is a one-time event charging request, and the second charging request carries the charging information and the corresponding online direct deduction indication information or the corresponding offline one-time event charging indication information; and
the transceiver unit is further configured to send the second charging request to the primary CHF entity.

With reference to the third aspect, in a possible implementation, the target CHF entity is the second R-CHF entity, the first charging request is a first charging resource update request or a first charging resource release request, and is used to request to update or release a first charging resource for charging interaction between the second R-CHF entity and the CTF entity, and the processing unit is specifically configured to:
generate a fourth charging resource between the CTF entity and the first R-CHF entity based on the first charging request, and use an identifier of the first charging resource as an identifier of the fourth charging resource; generate the second charging request based on the first charging request, where the second charging request is used to request to create the second charging resource for charging interaction between the first R-CHF entity and the primary CHF entity, and the second charging request carries an identifier of the third charging resource;
the transceiver unit is further configured to send the second charging request to the primary CHF entity, and receive a second charging response message from the primary CHF entity that is in response to the second charging request, where the second charging response message carries an identifier of the second charging resource;
the processing unit is further configured to generate, based on the second charging response message, the first charging response message in response to the first charging request; and
the transceiver unit is further configured to send the first charging response message to the CTF entity.

According to a fourth aspect, an embodiment of this application provides a primary CHF entity, including a transceiver unit and a processing unit. The primary CHF entity provides online quota management and charging data record generation.

The transceiver unit is further configured to receive related charging information cached in a first R-CHF entity, where the cached related charging information is carried in a charging data record or a charging message, and the cached related charging information includes charging information and a corresponding quota suspension identifier or a corresponding quota consumption identifier; and
the processing unit is configured to perform charging processing based on the quota suspension identifier or the quota consumption identifier.

With reference to the fourth aspect, in a possible implementation, the processing unit is specifically configured to:
directly deduct service usage in the charging information from an account balance corresponding to a charging resource of the primary CHF entity; and
if the cached charging information has the corresponding quota consumption identifier, directly deduct the service usage in the charging information from an account corresponding to a first charging resource, and simultaneously release a locked account balance; or
if the cached charging information includes charging information without quota management, write the charging information without quota management into a primary CHF charging data record.

According to a fifth aspect, an embodiment of this application provides a first R-CHF entity, including a processor and a memory. The memory is configured to store program code. The processor is configured to invoke the program code stored in the memory, to perform the method provided in any one of the first aspect or the possible implementations of the first aspect.

According to a sixth aspect, an embodiment of this application provides a primary CHF entity, including a processor and a memory. The memory is configured to store program code. The processor is configured to invoke the program code stored in the memory, to perform the method provided in any one of the second aspect or the possible implementations of the second aspect.

According to a seventh aspect, an embodiment of this application provides a computer storage medium, including computer instructions. When the computer instructions are run on an electronic device, the electronic device is enabled to perform the method according to the possible implementations of the first aspect, or the method according to the possible implementations of the second aspect.

According to an eighth aspect, an embodiment of this application provides a computer program product. When the computer program product is run on a computer, the computer is enabled to perform the method according to the possible implementations of the first aspect, or the method according to the possible implementations of the second aspect.

According to a ninth aspect, an embodiment of this application provides a charging anomaly processing method, where the method is applied to a charging system. The charging system includes a first R-CHF entity, a second R-CHF entity, a CTF entity, and a primary CHF entity, and the method includes:

The CTF entity sends a first charging request to the first R-CHF entity; and
the first R-CHF entity determines that an anomaly occurs in interaction with a target CHF entity related to the first charging request, and performs charging anomaly processing, where
the target CHF entity is the primary CHF entity or the second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

According to a tenth aspect, an embodiment of this application provides a charging system. The charging system includes a first R-CHF entity, a second R-CHF entity, a CTF entity, and a primary CHF entity, where
the CTF entity is configured to send a first charging request to the first R-CHF entity; and
the first R-CHF entity is configured to: determine that an anomaly occurs in interaction with a target CHF entity related to the first charging request, and perform charging anomaly processing, where
the target CHF entity is the primary CHF entity or the second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

It can be understood that, for specific descriptions of the CTF entity, the first R-CHF entity, and the primary CHF entity in the ninth aspect or the tenth aspect, refer to the method according to any one of the possible implementations of the first aspect and the method according to any one of the possible implementations of the second aspect. Details are not described herein again. The first R-CHF entity according to the third aspect or the fifth aspect is configured to perform the method according to any one of the possible implementations of the first aspect, the primary CHF entity according to the fourth aspect or the sixth aspect is configured to perform the method according to any one of the possible implementations of the second aspect, and both the computer storage medium according to the seventh aspect and the computer program product according to the eighth aspect are configured to implement the method according to any one of the possible implementations of the first aspect or the method according to any one of the possible implementations of the second aspect. Therefore, for beneficial effects that can be achieved thereof, refer to the beneficial effects in the corresponding methods. Details are not described herein again.

### BRIEF DESCRIPTION OF DRAWINGS

FIG. 1 is a diagram of an architecture of a system;
FIG. 2 is a diagram of an architecture of a system according to an embodiment of this application;
FIG. 3 is a schematic flowchart of a charging anomaly processing method according to an embodiment of this application;
FIG. 4 is a schematic flowchart of another charging anomaly processing method according to an embodiment of this application;
FIG. 5 is a schematic interaction flowchart of a charging anomaly processing method according to an embodiment of this application;
FIG. 6 is a schematic interaction flowchart of another charging anomaly processing method according to an embodiment of this application;
FIG. 7 is a schematic interaction flowchart of another charging anomaly processing method according to an embodiment of this application;
FIG. 8 is a schematic interaction flowchart of another charging anomaly processing method according to an embodiment of this application;
FIG. 9 is a schematic interaction flowchart of another charging anomaly processing method according to an embodiment of this application;
FIG. 10 is a diagram of a structure of a first R-CHF entity according to an embodiment of this application;
FIG. 11 is a diagram of a structure of a primary CHF entity according to an embodiment of this application; and
FIG. 12 is a diagram of a structure of an electronic device according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order.

"A plurality of" refers to two or more than two. The term "and/or" describes an association relationship for describing associated objects and represents that three relationships exist. For example, A and/or B represent/represents the following three cases: Only A exists, both A and B exist, and only B exists. The character "/" generally indicates an "or" relationship between the associated objects.

The following describes embodiments of this application with reference to the accompanying drawings.

FIG. 2 is a diagram of an architecture of a system according to an embodiment of this application. As shown in FIG. 2, the system includes a CTF entity 201, an R-CHF entity 202, a primary CHF entity 203, an ABMF entity 204, a CGF entity 205, and an RF entity 206.

Optionally, a relay R-CHF is a local CHF, an edge CHF, or a serving CHF.

For a user equipment, a CHF that provides online quota management and/or user charging data record generation for the user is referred to as a primary CHF entity 203 of the user equipment. The primary CHF entity 203 is connected to the ABMF entity 204, the RF entity 206, and the CGF entity 205, to perform quota management, charging data record generation, account balance management, and the like. The primary CHF entity 203 is connected to a CRM, a top-up center, a charging capability provisioning system, an accounting system, and the like based on subscription information of the user equipment, to implement management of account information and the subscription information of the user equipment. The primary CHF entity 203 does not vary with a location of the user equipment.

For a user equipment, when the user uses a service beyond a processing range of the primary CHF entity 203 of the user equipment, the primary CHF entity 203 cannot provide charging. The R-CHF entity generates a first charging resource for the CTF entity, and establishes and maintains an association relationship between a second charging resource generated by the primary CHF entity and the first charging resource. In this way, the primary CHF entity charges, through the first charging resource and the second charging resource, a service provided by the CTF entity. The R-CHF entity 202 is a CHF entity that is close to the user equipment and that provides charging for the user equipment. Optionally, the R-CHF entity 202 and the primary CHF entity 203 belong to a same operator or belong to different operators. The R-CHF entity 202 may change as the user moves or a user access service changes.

In an example, a function of the R-CHF entity 202 includes but is not limited to: discovery of the primary CHF entity 203, forwarding of charging information, generation of an R-CHF charging data record, and a charging anomaly processing capability when an anomaly occurs in the primary CHF entity 203, for example, charging anomaly processing capability when congestion occurs in the primary CHF entity 203, the primary CHF entity 203 is unreachable, or quality of communication with the primary CHF entity 203 deteriorates (for example, a transmission delay or a jitter is increased), where anomaly perception and charging anomaly processing (such as charging retransmission, charging information caching, charging method conversion, congestion control, anomaly recovery, and charging information processing in an anomaly period) are implemented through a series of methods; and when an anomaly occurs in the original R-CHF entity, a charging anomaly processing capability of a new R-CHF entity to which switching is performed.

The following specifically describes an implementation procedure of this application.

FIG. 3 is a schematic flowchart of a charging anomaly processing method according to an embodiment of this application. The method is applied to a first R-CHF entity. The first R-CHF entity may be the R-CHF entity 202 in FIG. 2. As shown in FIG. 3, the method includes the following steps.

S301: The first R-CHF entity receives a first charging request sent by a CTF entity.

In an example, the first charging request is sent by the CTF entity in a scenario in which no charging session is established between the CTF entity and the first R-CHF entity, and no charging session is established between the first R-CHF entity and a primary CHF entity. In this case, the first charging request is a first charging resource creation request, and is used to request to create a first charging resource for charging interaction between the CTF entity and the first R-CHF entity.

In another example, the first charging request is sent by the CTF entity in a scenario in which a charging session has been established between the CTF entity and the first R-CHF entity, and a charging session has been established between the first R-CHF entity and a primary CHF entity. In this case, the first charging request is a second charging resource update request or a second charging resource release request, and is used to request to update or release a second charging resource for charging interaction between the first R-CHF entity and the CTF entity.

In another example, the first charging request is a one-time event charging request for online direct deduction or offline one-time event charging that is sent by the CTF entity in a scenario in which a charging session has been established between the CTF entity and the first R-CHF entity, and a charging session has been established between the first R-CHF entity and a primary CHF entity.

In another example, the first charging request is a first charging resource update request or a first charging resource release request sent by the CTF entity to the first R-CHF in a scenario in which a charging session has been established between the CTF entity and a second R-CHF entity and a charging session has been established between the second R-CHF entity and a primary CHF entity, and is used to request to update or release a first charging resource used for converged charging interaction between the first R-CHF entity and the CTF entity.

In another example, the first charging request is a first charging resource creation request sent by the CTF entity to the first R-CHF entity in a scenario in which a charging session has been established between the CTF entity and a primary CHF entity, and the first charging request is used to request to create a first charging resource for charging interaction between the CTF entity and the first R-CHF entity.

S302: The first R-CHF entity performs charging anomaly processing when determining that an anomaly occurs in interaction with a target CHF entity related to the first charging request.

In a possible implementation, the target CHF entity is a primary CHF entity corresponding to the first charging request, and the first charging request is the first charging resource creation request, and is used to request to create a charging interaction session between the CTF entity and the first R-CHF entity. This case is for two scenarios. Scenario 1: No charging session is established between the CTF entity and the first R-CHF entity, and no charging session is established between the first R-CHF entity and the primary CHF entity. Scenario 2: A charging session has been established between the CTF entity and the primary CHF entity.

For the foregoing two scenarios, that the first R-CHF entity performs charging anomaly processing includes:
The first R-CHF entity generates the first charging resource corresponding to the first charging request, and allocates an identifier of a charging resource to the first charging resource. The first R-CHF entity caches charging information in the first charging request, and sends a first charging response message in response to the first charging request to the CTF entity, where the first charging response message includes an identifier of the first charging resource. Optionally, the first charging response message includes quota suspension indication information or a granted quota. The quota suspension indication information may be determined based on first indication information carried in the first charging request. The first indication information indicates whether the CTF entity supports a quota suspension management capability, and the quota suspension indication information indicates the CTF entity to continue a service based on a quota suspension management mode.

Specifically, for the scenario 1, after the first R-CHF entity receives the first charging request, the first R-CHF entity generates the identifier of the first charging resource. The charging information in the first charging request includes charging information with quota management and/or charging information without quota management.

For the charging information without quota management, the first R-CHF entity caches the charging information without quota management. The cached charging information includes offline one-time event charging information, such as a service type and a service start time point. In an example, the first R-CHF entity directly caches the charging information without quota management in the first charging resource that is local (for example, in a local memory or is locally stored); or the first R-CHF entity generates a first R-CHF charging data record, where the first R-CHF charging data record includes the charging information without quota management.

For the charging information with quota management, because no charging session is established between the first R-CHF entity and the primary CHF entity, that is, the primary CHF entity has not allocated a quota to a user, and the charging information with quota management includes a quota application,
if the CTF entity supports the quota suspension management capability, the first R-CHF entity suspends quota management of the service, and caches the charging information with quota management. In an example, the first R-CHF entity directly caches the charging information with quota management in the first charging resource that is local (for example, in the local memory or is locally stored); or the first R-CHF entity generates the first R-CHF charging data record, where the first R-CHF entity charging data record includes the charging information with quota management. In this case, the first charging response message further includes the quota suspension indication information, where the quota suspension indication information indicates the CTF entity to continue the service based on the quota suspension management mode. After the CTF entity subsequently reports usage of the service after the quota is suspended to the first R-CHF entity, the first R-CHF entity caches charging information (for example, the service usage) of the suspended quota and a corresponding quota suspension identifier.

If the CTF entity does not support the quota suspension management capability, the first R-CHF entity performs a quota granting operation. Because the first R-CHF entity does not have account information of the user, the granted quota is a virtual granted quota, and the charging information with quota management is cached. In an example, the first R-CHF entity directly caches the charging information with quota management in the first charging resource that is local (for example, in the local memory or is locally stored); or the first R-CHF entity generates the first R-CHF charging data record, where the first R-CHF entity charging data record includes the charging information with quota management. In this case, the first charging response message further includes the granted quota. After receiving the first charging response message, the CTF entity manages the service and collects quota use information based on the granted quota. After the CTF entity subsequently reports the collected quota use information to the first R-CHF entity, the first R-CHF caches the charging information (for example, quota usage) with quota management and the quota suspension identifier. For example, the quota granted by the first R-CHF entity is 30 M. After the granted quota 30 M is used up (in this case, the collected quota usage is 30 M), the CTF entity reports information about the quota usage 30 M to the first R-CHF entity. After receiving the quota usage reported by the CTF, the first R-CHF entity stores the usage 30 M and a corresponding quota suspension identifier in the cached charging information.

For the scenario 2, the first charging request further carries related information of a third charging resource generated by the primary CHF entity for the CTF entity, for example, an identifier of the third charging resource. After receiving the first charging request, the first R-CHF entity creates the first charging resource between the CTF entity and the first R-CHF entity based on the information carried in the first charging request, and caches the related information that is of the third charging resource generated by the primary CHF entity and that is carried in the first charging request. The charging information in the first charging request includes charging information with quota management and/or charging information without quota management.

For the charging information without quota management, the first R-CHF entity caches the charging information without quota management. The cached charging information includes offline one-time event charging information, such as offline service usage and offline service information. In an example, the first R-CHF entity directly caches the charging information without quota management in the first charging resource that is local (for example, in a local memory or is locally stored); or the first R-CHF entity generates a first R-CHF charging data record.

For the charging information with quota management, because the charging session has been established between the CTF entity and the primary CHF entity, that is, the primary CHF entity may have allocated a quota to a user, the charging information with quota management includes a quota application and/or quota usage. The first R-CHF entity caches the charging information with quota management and a corresponding quota consumption identifier or a corresponding quota suspension identifier. If the first R-CHF entity caches the corresponding quota suspension identifier, the first R-CHF entity subsequently needs to notify the primary CHF entity to release the granted quota. In an example, the first R-CHF entity directly caches the charging information with quota management and the corresponding quota consumption identifier or the corresponding quota suspension identifier in the first charging resource that is local (for example, in the local memory or is locally stored); or the first R-CHF entity generates the first R-CHF charging data record, where the first R-CHF entity charging data record includes the charging information with quota management and the corresponding quota consumption identifier or the corresponding quota suspension identifier.

In addition, if the CTF entity supports the quota suspension management capability, the first R-CHF entity suspends quota management of the service. In this case, the first charging response message further includes the quota suspension indication information, where the quota suspension indication information indicates the CTF entity to continue the service based on the quota suspension management mode. After the CTF entity subsequently reports usage of the service after the quota is suspended to the first R-CHF entity, the first R-CHF entity caches charging information (for example, the service usage) of the suspended quota and a corresponding quota suspension identifier.

If the CTF entity does not support the quota suspension management capability, the first R-CHF entity performs a quota granting operation. Because the first R-CHF entity does not have account information of the user, the granted quota is a virtual granted quota. After receiving the first charging response message, the CTF entity manages the service and collects quota use information based on the granted quota. After the CTF entity subsequently reports the collected quota use information to the first R-CHF entity, the first R-CHF caches the charging information (for example, quota usage) with quota management and the quota suspension identifier.

In another possible implementation, the target CHF entity is a primary CHF entity corresponding to the first charging request. The first charging request is sent by the CTF entity in a scenario in which the charging session has been established between the CTF entity and the first R-CHF entity, and the charging session has been established between the first R-CHF entity and the primary CHF entity. In this case, the first charging request is the first charging resource update request or the first charging resource release request, and is used to request to update or release the first charging resource for charging interaction between the first R-CHF entity and the CTF entity.

That the first R-CHF entity performs charging anomaly processing includes:

For charging information without quota management, the first R-CHF entity caches the charging information without quota management. The cached charging information includes offline one-time event charging information, such as offline service usage and offline service information. In an example, the first R-CHF entity directly caches the charging information without quota management in the first charging resource that is local (for example, in a local memory or is locally stored); or the first R-CHF entity generates a first R-CHF charging data record.

For the charging information with quota management, because the charging session has been established with the primary CHF entity, that is, the primary CHF entity may have allocated a quota to a user, the charging information with quota management includes a quota application and/or quota usage. The first R-CHF entity caches the charging information with quota management and a corresponding quota consumption identifier or a corresponding quota suspension identifier. If the first R-CHF entity caches the corresponding quota suspension identifier, the first R-CHF entity subsequently needs to notify the CHF to release the granted quota. In an example, the first R-CHF entity directly caches the charging information with quota management and the corresponding quota consumption identifier or the corresponding quota suspension identifier in the first charging resource that is local (for example, in the local memory or is locally stored); or the first R-CHF entity generates the first R-CHF charging data record, where the first R-CHF entity charging data record includes the charging information with quota management and the corresponding quota consumption identifier or the corresponding quota suspension identifier.

In addition, when the first R-CHF entity has no available quota, if the CTF entity supports a quota suspension management capability, the first R-CHF entity suspends quota management of a service. In this case, the first charging response message further includes quota suspension indication information, where the quota suspension indication information indicates the CTF entity to continue the service based on a quota suspension management mode. After the CTF entity subsequently reports usage of the service after the quota is suspended to the first R-CHF entity, the first R-CHF entity caches charging information (for example, the service usage) of the suspended quota and a corresponding quota suspension identifier.

When the first R-CHF entity has no available quota, if the CTF entity does not support the quota suspension management capability, the first R-CHF entity performs a quota granting operation. Because the first R-CHF entity does not have account information of the user, the granted quota is a virtual granted quota. After receiving the first charging response message, the CTF entity manages the service and collects quota use information based on the granted quota. After the CTF entity subsequently reports the collected quota use information to the first R-CHF entity, the first R-CHF caches the charging information (for example, quota usage) with quota management and the quota suspension identifier.

When the first R-CHF entity has an available quota, if the CTF entity supports the quota suspension management capability, the first R-CHF entity may perform processing in the following manners.

Manner 1: The first R-CHF entity suspends the quota management of the service, that is, the current available quota is not used, and after the primary CHF entity is restored subsequently, the first R-CHF entity notifies the primary CHF entity to release the quota. Anomaly processing performed by the first R-CHF entity in this scenario is the same as that in the foregoing case in which the first R-CHF entity has no available quota.

Manner 2: The first R-CHF entity provides quota granting and deduction for the service based on the available quota, and suspends the quota management of the service after the available quota is used up. The charging information with quota management includes two parts: first charging information and second charging information, where the first charging information is charging information that uses the available quota granted by the primary CHF entity, and the second charging information is charging information that does not use the available quota granted by the primary CHF entity. That the first R-CHF entity caches the charging information with quota management includes: caching the first charging information and a corresponding quota consumption identifier, and caching the second charging information and a corresponding quota suspension identifier.

When the first R-CHF entity has an available quota, if the CTF entity does not support the quota suspension management capability, the first R-CHF entity may perform processing in the following manners.

Manner 1: The first R-CHF entity grants a virtual quota, that is, the current available quota is not used, and after the primary CHF entity is restored subsequently, the first R-CHF entity notifies the primary CHF to release the quota. In this scenario, after receiving use information that is of the virtual quota and that is subsequently reported by the CTF entity, the first R-CHF entity caches the use information and a corresponding quota consumption identifier.

Manner 2: The first R-CHF entity provides quota granting and deduction for the service based on the available quota, and grants a virtual quota after the available quota is used up. The charging information with quota management includes two parts: first charging information and second charging information, where the first charging information is charging information that uses the available quota granted by the primary CHF entity, and the second charging information is charging information (a part corresponding to the virtual quota) that does not use the available quota granted by the primary CHF entity. That the first R-CHF entity caches the charging information with quota management includes: caching the first charging information and a corresponding quota consumption identifier, and caching the second charging information and a corresponding quota suspension identifier.

It should be understood that, the available quota of the first R-CHF entity is a quota granted by the primary CHF entity before an anomaly occurs.

In a possible implementation, a manner in which the first R-CHF entity detects that an anomaly occurs in interaction with the target CHF entity (namely, the primary CHF entity) includes:
1. The first R-CHF entity determines, based on an application layer congestion indication returned by the primary CHF entity or when detecting that a delay of returning a charging response message by the primary CHF entity is increased, that is, when detecting that congestion occurs in the primary CHF entity, that an anomaly occurs in interaction between the first R-CHF entity and the primary CHF entity.
2. When detecting that connection between a transport layer of the first R-CHF entity and a transport layer of the primary CHF entity is interrupted, that is, when detecting that the primary CHF entity is unreachable, the first R-CHF entity determines that the anomaly occurs in the interaction between the first R-CHF entity and the primary CHF entity.
3. The first R-CHF entity determines, based on a transport layer congestion control mechanism or a jitter, that congestion occurs between the transport layer of the first R-CHF entity and the transport layer of the primary CHF entity, that is, quality of communication between the first R-CHF entity and the primary CHF entity deteriorates, and further determines that the anomaly occurs in the interaction between the first R-CHF entity and the primary CHF entity.

It should be understood that, that the anomaly occurs in the interaction between the first R-CHF entity and the primary CHF entity means that there is no standby primary CHF in the foregoing case.

Before charging anomaly processing is performed, if the CTF entity and the first R-CHF entity separately belong to different operators, the first R-CHF entity determines, based on operator configuration information, whether a user equipment is authorized to use a current service. The first R-CHF entity performs charging anomaly processing when determining that the user equipment is authorized to use the current service; or does not perform charging anomaly processing when determining that the user equipment is not authorized to use the current service.

In a possible implementation, the method in this embodiment further includes:

When the first R-CHF entity detects that interaction with the target CHF entity related to the first charging request is normal, the first R-CHF entity generates a second charging request, and sends the second charging request to the primary CHF entity. The second charging request is the first charging resource creation request, and is used to request to create a first charging resource for charging interaction between the first R-CHF entity and the primary CHF entity, or the second charging request is a charging resource update request or a charging resource release request, and is used to request to update or release the third charging resource for charging interaction between the CTF entity and the primary CHF entity.

Optionally, if the cached charging information is cached in the local first charging resource of the first R-CHF entity, the second charging request includes the cached charging information, that is, the second charging request carries the cached charging information and the corresponding quota consumption identifier or the corresponding quota suspension identifier. Optionally, if the first R-CHF entity has the available quota allocated by the primary CHF entity in an anomaly period but the available quota is not used, the second charging request further includes release indication information, which indicates the primary CHF entity to release the quota granted by the primary CHF entity to the first R-CHF entity. Optionally, if the first R-CHF entity has a quota application of the CTF, the second charging request further includes the quota application.

In a possible implementation, this embodiment further includes:

When the first R-CHF entity detects that interaction with the target CHF entity related to the first charging request is normal, if the cached charging information is cached in the first R-CHF charging data record, details are as follows:
Method 1: The first R-CHF entity sends the second charging request to the primary CHF, where the second charging request carries the charging information stored in the first R-CHF charging data record; and
Method 2: The first R-CHF entity separately sends the first R-CHF charging data record to the primary CHF entity regardless of whether the first R-CHF entity sends the second charging request to the primary CHF.

Specifically, the first R-CHF sends the first R-CHF charging data record to the primary CHF entity through a file transfer protocol (file transfer protocol, FTP) or in another manner. The first R-CHF entity may further include a storage address of the first R-CHF charging data record in the charging request sent to the primary CHF entity, so that the primary CHF entity obtains the first R-CHF charging data record based on the storage address.

In a possible implementation, the method in this embodiment further includes:

Before generating the second charging request, the first R-CHF entity sends a notification message to the CTF entity, where the notification message indicates the CTF entity to restore quota management; and the first R-CHF entity receives a third charging request sent by the CTF entity, where the third charging request carries a quota request and usage for restoring quota management, and the second charging request includes the quota request and the usage that are carried in the third charging request.

It should be noted that, the usage herein is usage of the suspended quota or usage of the granted quota.

In a possible implementation, the target CHF entity is the primary CHF entity corresponding to the first charging request, the first charging request is an online direct deduction (namely, immediate event charging (Immediate Event Charging, IEC)) request or an offline one-time event charging (namely, post event charging (Post Event Charging, PEC)) request, and that the first R-CHF entity performs charging anomaly processing includes:

The first R-CHF entity caches the charging information in the first charging request, and sends the first charging response message in response to the first charging request to the CTF entity.

In a possible implementation, that the first R-CHF entity caches the charging information in the first charging request includes:

The first R-CHF entity writes the charging information and corresponding online direct deduction indication information or corresponding offline one-time event charging indication information into the first R-CHF charging data record, and when detecting that interaction with the target CHF related to the first charging request is normal, the first R-CHF entity sends the first R-CHF charging data record to the primary CHF entity. The first R-CHF charging data record includes the charging information and the corresponding online direct deduction indication information or the corresponding offline one-time event charging indication information.

The first R-CHF sends the first R-CHF charging data record to the primary CHF entity through the FTP or in another manner. The first R-CHF entity may further include the storage address of the first R-CHF charging data record in the charging request sent to the primary CHF entity, so that the primary CHF entity obtains the first R-CHF charging data record based on the storage address.

In a possible implementation, the method in this embodiment further includes:

The first R-CHF entity stores the charging information and the corresponding online direct deduction indication information or the corresponding offline one-time event charging indication information in the first charging resource; the first R-CHF entity generates the second charging request when detecting that interaction with the target CHF related to the first charging request is normal, where the second charging request is a one-time event charging request, and the second charging request carries the charging information and the corresponding online direct deduction indication information or the corresponding offline one-time event charging indication information; and the first R-CHF entity sends the second charging request to the primary CHF entity.

After the primary CHF entity receives the second charging request, if the second charging request includes the online direct deduction indication information, the primary CHF entity performs deduction from an account balance based on online usage of the charging information; or if the second charging information includes the offline one-time event charging indication information, the primary CHF entity writes the offline one-time event charging information in the charging information into a primary CHF charging data record.

In a possible implementation, the target CHF entity is the second R-CHF entity corresponding to the first charging request, and the second R-CHF entity is a CHF entity that provides a relay for the CTF entity and the primary CHF entity before the first R-CHF entity serves as a relay CHF entity; the first charging request is a first charging resource update request or a first charging resource release request, and is used to request to update or release a first charging resource for charging interaction between the second R-CHF entity and the CTF entity, where the first charging request carries an identifier of the first charging resource; and that the first R-CHF entity performs charging anomaly processing includes:

The first R-CHF entity creates a fourth charging resource between the CTF entity and the first R-CHF entity based on the first charging request, and uses the identifier of the first charging resource as an identifier of the fourth charging resource; and the first R-CHF entity generates the second charging request based on the first charging request, and sends the second charging request to the primary CHF entity. Because the first R-CHF entity cannot interact with the second R-CHF entity to obtain an identifier of a charging resource that is allocated by the primary CHF to the second R-CHF entity and that is for performing charging on the user, the second charging request is a second charging resource creation request, and is used to request to create the second charging resource for charging interaction between the first R-CHF entity and the primary CHF entity. The second charging resource creation request carries the charging information with quota management or the charging information without quota management. The primary CHF determines the identifier of the existing charging resource (namely, the identifier that is of the charging resource allocated by the primary CHF to the second R-CHF and that is for performing charging on the user) based on information such as a user identifier and a charging ID in the second charging request, performs charging processing (for example, grants a quota, deducts quota usage, and writes into the primary CHF charging data record), and returns the identifier of the existing charging resource. The first R-CHF entity receives a second charging response message in response to the second charging request from the primary CHF entity; and generates, based on the second charging response message, the first charging response message in response to the first charging request; and the first R-CHF entity sends the first charging response message to the CTF entity.

When an anomaly occurs in interaction between the CTF entity and the second R-CHF entity, switching from the second R-CHF entity to the first R-CHF entity is implemented in the foregoing manner, so that normal charging can be ensured.

In a possible implementation, the method in this embodiment further includes:

If the first R-CHF entity detects that an identifier of a charging resource between the CTF entity and the second R-CHF entity is not a unique local resource identifier, that is, the identifier of the charging resource between the CTF entity and the second R-CHF entity conflicts with an identifier of another charging resource in the first R-CHF entity, the first R-CHF entity generates a new identifier of the charging resource, uses the new identifier of the charging resource as the identifier of the third charging resource, and returns the new identifier of the charging resource to the CTF entity to replace the current identifier of the charging resource, to avoid a conflict.

It can be learned that, in the solution of this application, for a case in which the anomaly occurs in the interaction between the first R-CHF entity and the target CHF entity, different charging anomaly processing manners are used, so that normal charging can be ensured, to avoid a loss caused for an operator.

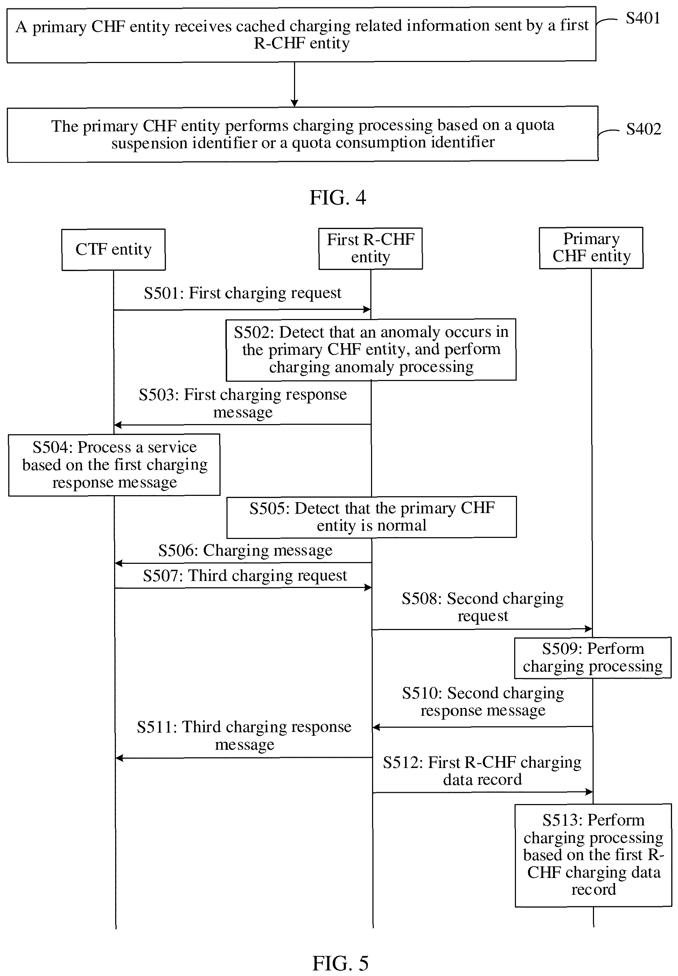

FIG. 4 is a schematic flowchart of another charging anomaly processing method according to an embodiment of this application. The method is applied to a primary CHF entity. The primary CHF entity provides online quota management and charging data record generation. As shown in FIG. 4, the method further includes the following steps.

S401: The primary CHF entity receives cached charging related information sent by a first R-CHF entity.

The cached charging related information is sent to the primary CHF entity in a form of a charging data record or carried in a charging request sent to the primary CHF, and the cached charging related information includes charging information and a corresponding quota suspension identifier or a corresponding quota consumption identifier. The charging information includes charging information with quota management and/or charging information without quota management.

Specifically, when the cached charging related information is sent to the primary CHF entity in the form of the charging data record, the charging data record is sent to the primary CHF entity through an FTP or in another manner, or the first R-CHF entity may further include a storage address of a first R-CHF charging data record in the charging request sent to the primary CHF entity, so that the primary CHF entity obtains the charging data record based on the storage address.

S402: The primary CHF entity performs charging processing based on the quota suspension identifier or the quota consumption identifier.

Specifically, in the charging information with quota management that is cached in the first R-CHF entity and that is sent through the charging data record or a second charging request, for the charging information with the quota suspension identifier, the primary CHF entity directly deducts service usage in the charging information from an account balance corresponding to a first charging resource; and for the charging information with the quota consumption identifier, the primary CHF entity performs a quota consumption deduction operation (for example, deducting from a balance or releasing a locked quota). It should be understood that, an account balance locked by the primary CHF entity is a quota granted by the primary CHF entity to the first R-CHF entity before an anomaly occurs in interaction. In an example, when the cached charging information includes release indication information, the primary CHF entity further releases the locked account balance. The release indication information indicates the primary CHF entity to release the locked account balance, that is, indicates the primary CHF entity to release the quota granted to the first R-CHF entity before the anomaly occurs in the interaction.

For the charging information without quota management, the primary CHF entity writes the charging information without quota management into a primary CHF charging data record.

In an example, when the second charging request is a second charging resource creation request, and is used to request to create a second charging resource for charging interaction between the first R-CHF entity and the primary CHF entity, when the primary CHF entity performs the foregoing operation, the primary CHF entity further creates the second charging resource or binds the second charging request to an existing charging resource, and sends an identifier of the second charging resource to the first R-CHF entity.

It can be learned that, in the solution of this application, for a case in which an anomaly occurs in interaction between the first R-CHF entity and the primary CHF entity, the primary CHF entity can ensure normal charging in the foregoing processing manner, to avoid a loss caused for an operator.

FIG. 5 is a schematic interaction flowchart of a charging anomaly processing method according to an embodiment of this application. The embodiment shown in FIG. 5 is for a scenario in which no charging session is established between a CTF entity and a first R-CHF entity and no charging session is established between the first R-CHF entity and a primary CHF entity. As shown in FIG. 5, the method includes the following steps.

S501: The CTF entity sends a first charging request to the first R-CHF entity.

The first charging request is a charging resource creation request for creating a converged charging session, and is used to request to establish a charging interaction session between the CTF entity and the first R-CHF entity. The first charging request includes charging information and first indication information. The first indication information indicates whether the CTF entity supports a quota suspension management capability.

In an example, the charging information is charging information with quota management or charging information without quota management. In another example, the charging information includes charging information with quota management and charging information without quota management.

S502: The first R-CHF entity detects that an anomaly occurs in the primary CHF entity, and performs charging anomaly processing.

In a possible implementation, a manner in which the first R-CHF entity detects that an anomaly occurs in interaction with a target CHF entity (namely, the primary CHF entity) includes:
1. The first R-CHF entity determines, based on an application layer congestion indication returned by the primary CHF entity or when detecting that a delay of returning a charging response message by the primary CHF entity is increased, that is, when detecting that congestion occurs in the primary CHF entity, that an anomaly occurs in interaction between the first R-CHF entity and the primary CHF entity.
2. When detecting that connection between a transport layer of the first R-CHF entity and a transport layer of the primary CHF entity is interrupted, that is, when detecting that the primary CHF entity is unreachable, the first R-CHF entity determines that the anomaly occurs in the interaction between the first R-CHF entity and the primary CHF entity.
3. The first R-CHF entity determines, based on a transport layer congestion control mechanism or a jitter, that congestion occurs between the transport layer of the first R-CHF entity and the transport layer of the primary CHF entity, that is, quality of communication between the first R-CHF entity and the primary CHF entity deteriorates, and further determines that the anomaly occurs in the interaction between the first R-CHF entity and the primary CHF entity.

It should be understood that, that the anomaly occurs in the interaction between the first R-CHF entity and the primary CHF entity means that there is no standby primary CHF in the foregoing case.

If the CTF entity and the first R-CHF entity separately belong to different operators, the first R-CHF entity determines, based on operator configuration information, whether a user equipment is authorized to use a current service. When determining that the user equipment is authorized to use the current service, the first R-CHF entity generates an identifier of a charging resource for the CTF entity, and performs the following charging anomaly processing. When determining that the user equipment is not authorized to use the current service, the first R-CHF entity does not perform the following charging anomaly processing.

Specifically, that the first R-CHF entity performs charging anomaly processing specifically includes:
For the charging information without quota management, the first R-CHF entity caches the charging information without quota management. The cached charging information includes offline one-time event charging information, such as offline service usage and offline service information. In an example, the first R-CHF entity directly caches the charging information without quota management in the first charging resource that is local (for example, in a local memory or is locally stored); or the first R-CHF entity generates a first R-CHF charging data record, where the first R-CHF charging data record includes the charging information without quota management.

For the charging information with quota management, if the CTF entity supports the quota suspension management capability, the first R-CHF entity suspends quota management of the service, and caches the charging information with quota management. In an example, the first R-CHF entity directly caches the charging information with quota management in the first charging resource that is local (for example, in the local memory or is locally stored); or the first R-CHF entity generates the first R-CHF charging data record, where the first R-CHF entity charging data record includes the charging information with quota management.

If the CTF entity does not support the quota suspension management capability, the first R-CHF entity performs a quota granting operation, and caches the charging information with quota management. In an example, the first R-CHF entity directly caches the charging information with quota management in the first charging resource that is local (for example, in the local memory or is locally stored); or the first R-CHF entity generates the first R-CHF charging data record, where the first R-CHF entity charging data record includes the charging information with quota management.

After receiving a first charging response message, the CTF entity collects usage of a granted quota. When the first R-CHF entity receives the usage reported by the CTF entity, the cached information further includes a quota suspension identifier corresponding to the usage. For example, the quota granted by the first R-CHF entity is 30 M, and the usage collected by the CTF entity is 20 M. The CTF entity transmits information about the usage 20 M to the first R-CHF entity. The first R-CHF entity receives the information about the usage 20 M, and marks, in the cached charging information through the quota suspension identifier, charging information corresponding to 20 M as quota suspension.

S503: The first R-CHF entity sends the first charging response message to the CTF entity.

The first charging response message is in response to the first charging request. The first charging response message includes an identifier of the first charging resource generated by the first R-CHF entity for the CTF entity. Optionally, for the charging information with quota management in the charging information, if the CTF entity supports the quota suspension management capability, the first charging response message further includes quota suspension indication information, where the quota suspension indication information indicates the CTF entity to continue to process the service based on a quota suspension management mode; or if the CTF entity does not support the quota suspension management capability, the first charging response message further includes the quota granted by the first R-CHF entity.

S504: The CTF entity processes the service based on the first charging response message.

Processing the service includes collecting offline one-time event charging information. Optionally, if the first charging response message includes the quota suspension indication information, the CTF collects usage for quota suspension. Optionally, when the first charging response message includes the quota granted by the first R-CHF entity, the CTF entity monitors a use condition of the granted quota, and records quota usage.

S505: The first R-CHF entity detects that the primary CHF entity is normal.

S506: The first R-CHF entity sends a charging message to the CTF entity.

The charging message indicates the CTF entity to restore the suspended quota management. Optionally, the charging message is sent in a charging notification message or a charging response. It should be understood that, the charging notification message is actively sent by the first R-CHF entity to the CTF entity. The charging message is sent in the charging response, which means that the charging message is carried in the charging response sent by the first R-CHF entity to the CTF entity.

S507: The CTF entity sends a third charging request to the first R-CHF entity.

The third charging request is used for a quota request, and the third charging request includes a quota amount that is applied for. Optionally, the third charging request further includes usage of a quota during quota suspension.

S508: The first R-CHF entity sends a second charging request to the primary CHF entity.

The second charging request is a charging resource creation request for creating a converged charging session, and is used to request to establish a charging interaction session between the first R-CHF entity and the primary CHF entity. If the first R-CHF entity caches the charging information and the corresponding quota suspension identifier in the first charging resource, the second charging request further includes the charging information cached in the first R-CHF entity, namely, the charging information and the corresponding quota suspension identifier. If the first R-CHF entity receives the third charging request that is sent by the CTF entity after the CTF entity restores quota suspension management, the second charging request further includes the quota request and the usage that are carried in the third charging request. It should be noted that, the usage herein is usage of a suspended quota or usage of the granted quota.

Because the primary CHF entity is unreachable, the first R-CHF entity needs to obtain an address of the primary CHF entity, to interact with the primary CHF entity.

Optionally, the first R-CHF entity determines the address of the primary CHF entity in the following manners.

Manner 1: The first R-CHF entity determines the address of the primary CHF entity based on an identifier of the CTF entity. In an example, the first R-CHF entity queries a correspondence table based on the identifier of the CTF entity, to determine the address of the primary CHF entity, where the correspondence table is a table of a correspondence between the identifier of the CTF entity, an identifier of the primary CHF entity, and the address of the primary CHF entity.

Manner 2: The first R-CHF entity determines the address of the primary CHF entity based on location information of the user equipment. In an example, the first R-CHF entity determines a location of the user equipment based on the location information of the user equipment, then determines the primary CHF entity that provides charging for an area to which the location of the user equipment belongs, and obtains the address of the primary CHF entity.

Manner 3: The first R-CHF entity determines the address of the primary CHF based on information about a service used by the user equipment, where the primary CHF is a CHF entity that provides charging for the service used by the user equipment.

It should be understood that, the correspondence table, a coverage area of the CHF, service information that the CHF can provide charging, and the like are stored in charging configuration information of a network resource function (network resource function, NRF) entity or the CTF entity.

S509: The primary CHF entity performs charging processing.

Specifically, the primary CHF entity generates a second charging resource for the first R-CHF entity and an identifier of the second charging resource. Optionally, the second charging request includes the charging information cached in the first charging resource of the first R-CHF entity. If the cached charging information includes the charging information and the corresponding quota suspension identifier, the primary CHF entity directly deducts, based on the charging information corresponding to the quota suspension identifier, service usage in the charging information from an account balance corresponding to the second charging resource. If the charging information cached in the first R-CHF entity includes the offline service usage, the primary CHF entity writes the offline service usage into a primary CHF charging data record.

Optionally, if the second charging request includes the third charging request, the primary CHF entity performs quota granting based on the quota amount that is applied for in the third charging request.

S510: The primary CHF entity sends a second charging response message to the first R-CHF entity.

The second charging response message includes the identifier of the second charging resource generated by the primary CHF entity for the first R-CHF entity and a charging processing result. The charging processing result includes an online charging processing result and an offline one-time event charging processing result.

S511: The first R-CHF entity sends a third charging response message to the CTF entity.

The third charging response message is in response to the third charging request. The third charging response message includes content included in the second charging response message and capability information fed back by the first R-CHF. The capability information includes at least one of a payload size of a charging message for the first charging resource, idle duration in collection of the charging information by the CTF entity for the first charging resource, a charging characteristic, or a first charging resource trigger condition setting. The trigger condition setting includes a trigger condition for reporting the charging information, for example, whether the charging information is reported, whether the reporting of the charging information is delayed, and performing reporting when a parameter value of the charging information meets a preset value.

S512: The first R-CHF entity sends the cached first R-CHF charging data record to the primary CHF entity.

Specifically, if the charging information cached in the first R-CHF entity is cached in a form of the first R-CHF charging data record, the first R-CHF entity sends the cached first R-CHF charging data record to the primary CHF entity. Optionally, the first R-CHF entity sends the cached first R-CHF charging data record to the primary CHF entity through an FTP or in another manner; or the first R-CHF entity sends a message (the message may be a resource update message or a charging request) to the primary CHF entity through the charging session between the first R-CHF entity and the primary CHF entity. The message carries an address of a space for storing the first R-CHF charging data record, so that the primary CHF entity obtains the first R-CHF charging data record based on the address, associates the first R-CHF charging data record with a corresponding identifier of a charging resource or a corresponding charging resource, and performs charging processing based on the charging resource corresponding to the associated identifier of the charging resource or the associated charging resource.

S513: The primary CHF entity performs charging processing based on the first R-CHF charging data record.

Specifically, the primary CHF entity associates the first R-CHF charging data record with a user account, or the primary CHF entity generates the charging resource indicated by the identifier of the charging resource. The first R-CHF charging data record includes the charging information cached in the first R-CHF entity. If the cached charging information includes the charging information corresponding to the quota suspension identifier, the primary CHF entity performs deduction from the account balance based on the charging information corresponding to the quota suspension identifier. If the cached charging information includes the offline service usage, the primary CHF entity writes the offline service usage into the primary CHF charging data record.

It should be noted herein that, S506 and S507 as well as S511 are optional. Optionally, S506 and S507 are performed before S508 to S511; or S508 to S510 are directly performed. There is no specific sequence between performing S512 and S513 and performing S509 to S511. Optionally, S512 and S513 are performed before S509 to S511; or S509 to S511 are performed before S512 and S513; or S512 and S513 as well as S509 to S511 are simultaneously performed.

When no charging session is established between the CTF entity and the first R-CHF entity and no charging session is established between the first R-CHF entity and the primary CHF entity, and when an anomaly occurs in interaction between the first R-CHF entity and the primary CHF entity, charging processing can be normally performed through the foregoing processing.

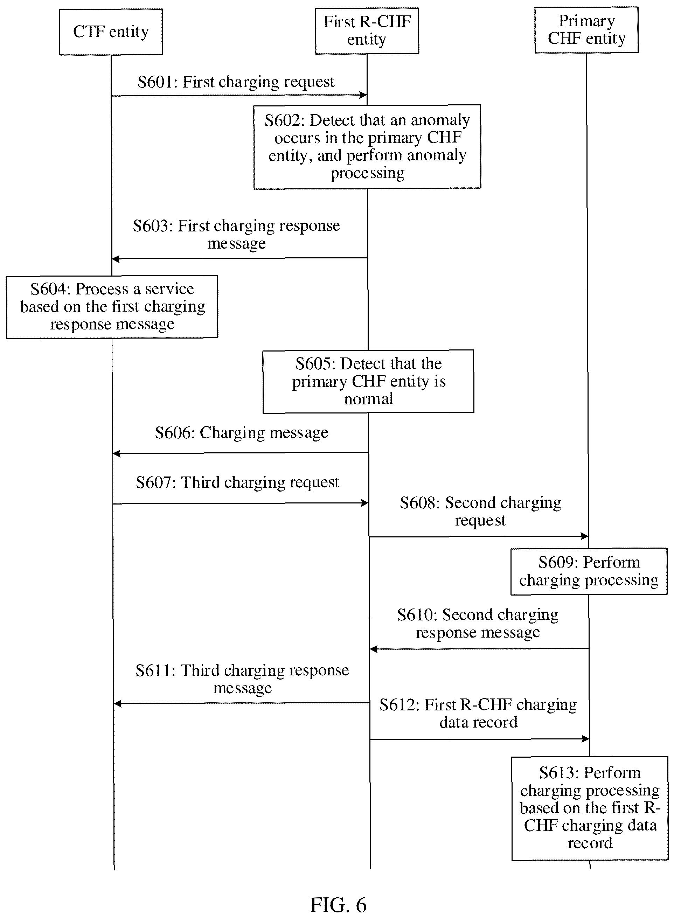

FIG. 6 is a schematic interaction flowchart of another charging anomaly processing method according to an embodiment of this application. The embodiment shown in FIG. 6 is for a scenario in which a charging session has been established between a CTF entity and a first R-CHF entity and a charging session has been established between the first R-CHF entity and a primary CHF entity. As shown in FIG. 6, the method includes the following steps.

S601: The CTF entity sends a first charging request to the first R-CHF entity.

The first charging request is a charging resource update request or a charging resource release request, and is used to request to update or release the converged charging session between the first R-CHF entity and the CTF entity. It should be understood that, a first charging request herein refers to a charging request sent on a premise that the charging session has been established between the CTF entity and the first R-CHF entity and the charging session has been established between the first R-CHF entity and the primary CHF entity.

The first charging request includes charging information and first indication information. The first indication information indicates whether the CTF entity supports a quota suspension management capability.

In an example, the charging information is charging information with quota management or charging information without quota management. In another example, the charging information includes charging information with quota management and charging information without quota management.

S602: The first R-CHF entity detects that an anomaly occurs in the primary CHF entity, and performs charging anomaly processing.

It should be noted herein that, for a specific manner in which the first R-CHF entity determines that the anomaly occurs in the primary CHF entity, refer to related descriptions of S502. Details are not described herein again.

Specifically, that the first R-CHF entity performs charging anomaly processing specifically includes:

For the charging information without quota management, the first R-CHF entity caches the charging information without quota management. The cached charging information includes offline one-time event charging information, such as offline service usage and offline service information. In an example, the first R-CHF entity directly caches the charging information without quota management in the first charging resource that is local (for example, in a local memory or is locally stored); or the first R-CHF entity generates a first R-CHF charging data record.

For the charging information with quota management, because the charging session has been established with the primary CHF entity, that is, the primary CHF entity may have allocated a quota to a user, the charging information with quota management includes a quota application and/or quota usage. The first R-CHF entity caches the charging information with quota management, and identifies the charging information with quota management as the quota usage or quota suspension usage. If the charging information with quota management is identified as the quota suspension usage, the first R-CHF entity subsequently needs to notify the CHF to release the granted quota. In an example, the first R-CHF entity directly caches the charging information with quota management and a corresponding quota consumption identifier or a corresponding quota suspension identifier in the first charging resource that is local (for example, in the local memory or is locally stored); or the first R-CHF entity generates the first R-CHF charging data record, where the first R-CHF entity charging data record includes the charging information with quota management and the corresponding quota consumption identifier or the corresponding quota suspension identifier.

In addition, when the first R-CHF entity has no available quota, if the CTF entity supports the quota suspension management capability, the first R-CHF entity suspends quota management of a service. In this case, a first charging response message further includes quota suspension indication information, where the quota suspension indication information indicates the CTF entity to continue the service based on a quota suspension management mode. After the CTF entity subsequently reports usage of the service after the quota is suspended to the first R-CHF entity, the first R-CHF entity caches charging information (for example, the service usage) of the suspended quota and the corresponding quota suspension identifier.

When the first R-CHF entity has no available quota, if the CTF entity does not support the quota suspension management capability, the first R-CHF entity performs a quota granting operation. Because the first R-CHF entity does not have account information of the user, the granted quota is a virtual granted quota. After receiving the first charging response message, the CTF entity manages the service and collects quota use information based on the granted quota. After the CTF entity subsequently reports the collected quota use information to the first R-CHF entity, the first R-CHF caches the charging information (for example, quota usage) with quota management and the quota suspension identifier.

When the first R-CHF entity has an available quota, if the CTF entity supports the quota suspension management capability, the first R-CHF entity may perform processing in the following manners.

Manner 1: The first R-CHF entity suspends the quota management of the service, that is, the current available quota is not used, and after the primary CHF entity is restored subsequently, the first R-CHF entity notifies the primary CHF entity to release the quota. Anomaly processing performed by the first R-CHF entity in this scenario is the same as that in the foregoing case in which the first R-CHF entity has no available quota.

Manner 2: The first R-CHF entity provides quota granting and deduction for the service based on the available quota, and suspends the quota management of the service after the available quota is used up. The charging information with quota management includes two parts: first charging information and second charging information, where the first charging information is charging information that uses the available quota granted by the primary CHF entity, and the second charging information is charging information that does not use the available quota granted by the primary CHF entity. That the first R-CHF entity caches the charging information with quota management includes: caching the first charging information and a corresponding quota consumption identifier, and caching the second charging information and a corresponding quota suspension identifier.

When the first R-CHF entity has an available quota, if the CTF entity does not support the quota suspension management capability, the first R-CHF entity may perform processing in the following manners.

Manner 1: The first R-CHF entity grants a virtual quota, that is, the current available quota is not used, and after the primary CHF entity is restored subsequently, the first R-CHF entity notifies the primary CHF to release the quota. In this scenario, after receiving use information that is of the virtual quota and that is subsequently reported by the CTF entity, the first R-CHF entity caches the use information and identifies the use information as the quota suspension usage.

Manner 2: The first R-CHF entity provides quota granting and deduction for the service based on the available quota, and grants a virtual quota after the available quota is used up. The charging information with quota management includes two parts: first charging information and second charging information, where the first charging information is charging information that uses the available quota granted by the primary CHF entity, and the second charging information is charging information (a part corresponding to the virtual quota) that does not use the available quota granted by the primary CHF entity. That the first R-CHF entity caches the charging information with quota management includes: caching the first charging information and a corresponding quota consumption identifier, and caching the second charging information and a corresponding quota suspension identifier.

It should be understood that, the available quota of the first R-CHF entity is a quota granted by the primary CHF entity before an anomaly occurs.

S603: The first R-CHF entity sends the first charging response message to the CTF entity.

The first charging response message is in response to the first charging request. Optionally, if the CTF entity supports a quota suspension management capability, the first charging response message further includes quota suspension indication information, where the quota suspension indication information indicates the CTF entity to continue a service based on a quota suspension management mode. If the first R-CHF entity performs a quota granting operation, the first charging response message further includes the quota granted by the first R-CHF entity.

S604: The CTF entity processes the service based on the first charging response message.

S605: The first R-CHF entity detects that the primary CHF entity is normal.

S606: The first R-CHF entity sends a charging message to the CTF entity.

S607: The CTF entity sends a third charging request to the first R-CHF entity.

S608: The first R-CHF entity sends a second charging request to the primary CHF entity.

S609: The primary CHF entity performs charging processing.

Optionally, the second charging request includes charging information cached in the first charging resource. If the cached charging information includes the charging information corresponding to the quota suspension identifier, the primary CHF entity directly deducts, based on the charging information corresponding to the quota suspension identifier, the service usage in the charging information from an account balance corresponding to a second charging resource. If the cached charging information includes the offline service usage, the primary CHF entity writes the offline service usage into a primary CHF charging data record. If the cached charging information further includes release indication information, the primary CHF entity releases a quota granted by the primary CHF entity before an anomaly occurs in the primary CHF entity. If the cached charging information further includes use information of the quota granted by the primary CHF entity before the anomaly occurs in the primary CHF entity and the first R-CHF entity, the primary CHF entity deducts, based on the use information, usage of a quota corresponding to the account balance corresponding to the second charging resource.

Optionally, if the second charging request includes a quota application of the third charging request, the primary CHF entity further includes the granted quota.

S610: The primary CHF entity sends a second charging response message to the first R-CHF entity.

S611: The first R-CHF entity sends a third charging response message to the CTF entity.

S612: The first R-CHF entity sends the cached first R-CHF charging data record to the primary CHF entity.

S613: The primary CHF entity performs charging processing based on the first R-CHF charging data record.

It should be noted herein that, for a specific implementation process of S604 to S608, refer to related descriptions in S504 to S508. For a specific implementation process of S610 to S613, refer to related descriptions in S510 to S513. Details are not described herein again.

It should be noted herein that, S606 and S607 as well as S611 are optional. Optionally, S606 and S607 are performed before S608 to S611; or S608 to S610 are directly performed. There is no specific sequence between performing S612 and S613 and performing S609 to S611. Optionally, S612 and S613 are performed before S609 to S611; or S609 to S611 are performed before S612 and S613; or S612 and S613 as well as S609 to S611 are simultaneously performed.

When the charging session has been established between the CTF entity and the first R-CHF entity and the charging session has been established between the first R-CHF entity and the primary CHF entity, and when an anomaly occurs in interaction between the first R-CHF entity and the primary CHF entity, charging processing can be normally performed through the foregoing processing.

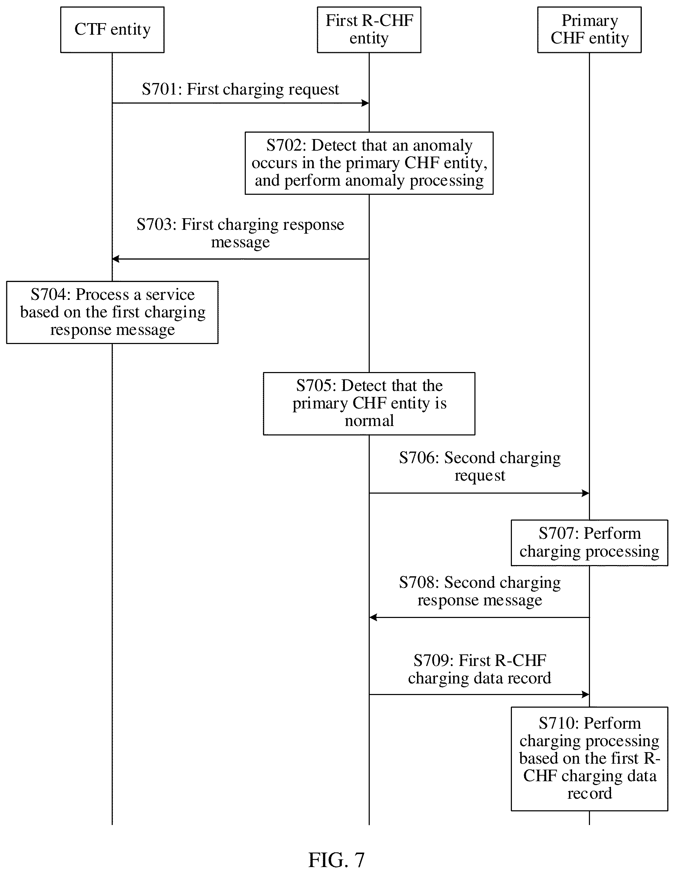

FIG. 7 is a schematic interaction flowchart of a charging anomaly processing method according to an embodiment of this application. The embodiment shown in FIG. 7 is a charging scenario in which a one-time charging event is performed. As shown in FIG. 7, the method includes the following steps.

S701: A CTF entity sends a first charging request to a first R-CHF entity.

The first charging request is a one-time event charging request for online direct deduction or offline one-time event charging. The first charging request is an online direct deduction (namely, IEC) request or an offline one-time event charging (namely, PEC) request.

S702: The first R-CHF entity detects that an anomaly occurs in a primary CHF entity, and performs charging anomaly processing.

It should be noted herein that, for a specific manner in which the first R-CHF entity determines that the anomaly occurs in the primary CHF entity, refer to related descriptions of S502. Details are not described herein again.

Specifically, processing performed after the first R-CHF entity detects that the anomaly occurs in the primary CHF entity includes:

Optionally, if the CTF entity and the first R-CHF entity separately belong to different operators, the first R-CHF entity determines, based on operator configuration information, whether a user equipment is authorized to use a current service. When determining that the user equipment is authorized to use the current service, the first R-CHF entity generates an identifier of a charging resource for the CTF entity, and performs the following charging anomaly processing. When determining that the user equipment is not authorized to use the current service, the first R-CHF entity does not perform the following charging anomaly processing.

S703: The first R-CHF entity sends a first charging response message to the CTF entity.

The first charging response message includes a charging processing result. The charging processing result includes a charging success or a charging failure. If the charging processing result is the charging failure, the charging processing result further includes a reason for the charging failure, for example, a charging information format error or information loss.

S704: The CTF entity processes a service based on the first charging response message.

Specifically, when the charging processing result is the charging failure, the CTF entity retransmits charging information or ends the service. When the charging processing result is the charging success, the CTF entity continues to collect offline one-time event charging information, online charging information, and the like.

S705: The first R-CHF entity detects that the primary CHF entity is normal.

S706: The first R-CHF entity sends a second charging request to the primary CHF entity.

If the second charging request is used to request to perform one-time event charging, the second charging request includes charging information cached in the first R-CHF entity.

S707: The primary CHF entity performs charging processing.

Specifically, online charging processing, for example, deduction from an account balance, is performed based on online charging indication information in the cached charging information, charging information with quota management, and a corresponding consumption quota identifier; and for offline service usage, the offline service usage is written into a primary CHF charging data record.

S708: The primary CHF entity sends a second charging response message to the first R-CHF entity.

The second charging response message is in response to the second charging request.

S709: The first R-CHF entity sends a cached first R-CHF charging data record to the primary CHF entity.

Specifically, if the charging information cached in the first R-CHF entity is cached in a form of the first R-CHF charging data record, the first R-CHF entity sends the cached first R-CHF charging data record to the primary CHF entity. Optionally, the first R-CHF entity sends the cached first R-CHF charging data record to the primary CHF entity through an FTP or in another manner; or the first R-CHF entity sends a message (the message may be a resource update message or a charging request) to the primary CHF entity through a charging session between the first R-CHF entity and the primary CHF entity. The message carries an address of a space for storing the first R-CHF charging data record, so that the primary CHF entity obtains the first R-CHF charging data record based on the address, associates the first R-CHF charging data record with a corresponding identifier of a charging resource or a corresponding charging resource, and performs charging processing based on the charging resource corresponding to the associated identifier of the charging resource or the associated charging resource.

S710: The primary CHF entity performs charging processing based on the first R-CHF charging data record.

Specifically, online charging processing, for example, deduction from an account balance, is performed based on online charging indication information in the cached charging information, charging information with quota management, and the corresponding consumption quota identifier; and for offline service usage, the offline service usage is written into the primary CHF charging data record.

It should be noted herein that, one of S706 to S708 as well as S709 and S710 is selected for execution.

When one-off charging is performed, and when an anomaly occurs in interaction between the first R-CHF entity and the primary CHF entity, charging processing can be normally performed through the foregoing processing.

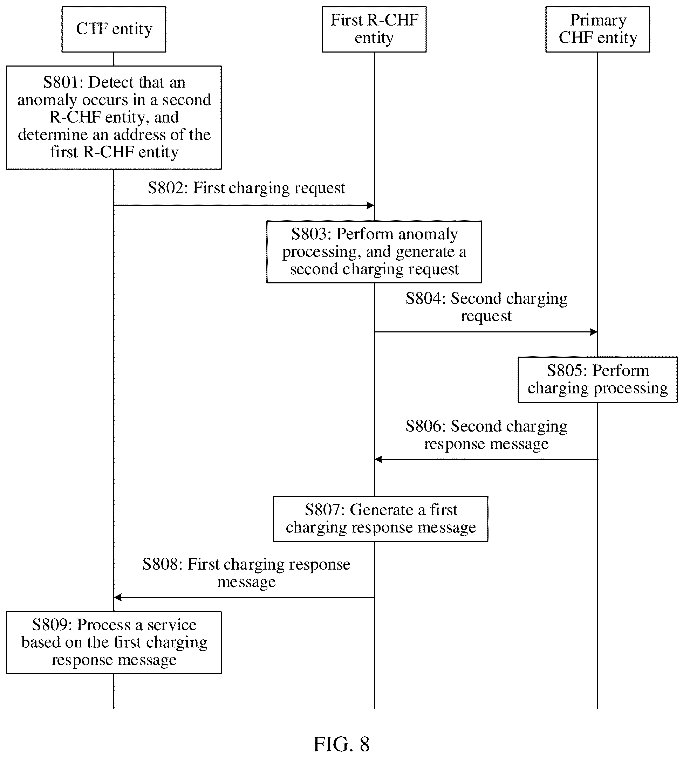

FIG. 8 is a schematic interaction flowchart of another charging anomaly processing method according to an embodiment of this application. The embodiment shown in FIG. 8 is for a scenario in which a charging session has been established between a CTF entity and a second R-CHF entity and a charging session has been established between a first R-CHF entity and a primary CHF entity. As shown in FIG. 8, the method includes the following steps.

S801: The CTF entity detects that an anomaly occurs in the second R-CHF entity, and determines an address of the first R-CHF entity.

Optionally, the CTF entity can determine, in the following manner, that the anomaly occurs in the second R-CHF entity.

1. The CTF entity determines, based on an application layer congestion indication returned by the second R-CHF entity or when detecting that a delay of returning a charging response message by the second R-CHF entity is increased, that is, when detecting that congestion occurs in the second R-CHF entity, that an anomaly occurs in interaction between the CTF entity and the second R-CHF entity.

2. When detecting that connection between a transport layer of the CTF entity and a transport layer of the second R-CHF entity is interrupted, that is, when detecting that the second R-CHF entity is unreachable, the CTF entity determines that the anomaly occurs in the interaction between the CTF entity and the second R-CHF entity.

3. The CTF entity determines, based on a transport layer congestion control mechanism or a jitter, that congestion occurs between the transport layer of the CTF entity and the transport layer of the second R-CHF entity, that is, quality of communication between the CTF entity and the second R-CHF entity deteriorates, and further determines that the anomaly occurs in the interaction between the CTF entity and the second R-CHF entity.

Optionally, the CTF entity determines the address of the first R-CHF entity in the following manners.

Manner 1: The CTF entity determines the address of the R-CHF entity based on an identifier of the CTF entity. In an example, the CTF queries a correspondence table based on the identifier of the CTF entity, to determine the address of the first R-CHF entity, where the correspondence table is a table of a correspondence between the identifier of the CTF entity, an identifier of the R-CHF entity, and the address of the R-CHF entity.

Manner 2: The CTF entity determines the address of the first R-CHF entity based on location information of a user equipment. In an example, the CTF entity determines a location of the user equipment based on the location information of the user equipment, determines a CHF entity that provides charging for an area to which the location of the user equipment belongs, determines the CHF entity as the first R-CHF entity, and obtains the address of the first R-CHF entity.

Manner 3: The CTF entity determines the address of the first R-CHF based on information about a service used by the user equipment, where the R-CHF is a CHF entity that provides charging for the service used by the user equipment. When there are a plurality of CHF entities that provide charging for the service used by the user equipment, the CTF entity selects a CHF entity whose coverage area has a smallest distance to the user equipment as the first R-CHF entity.

It should be understood that, the correspondence table, a coverage area of the CHF, service information that the CHF can provide charging, and the like are stored in charging configuration information of a network resource function (network resource function, NRF) entity or the CTF entity.

S802: The CTF entity sends a first charging request to the first R-CHF entity.

The first charging request is a first charging resource update request or a first charging resource release request, and is used to request to update or release a first charging resource between the second R-CHF entity and the CTF entity, and the first charging request carries an identifier of the first charging resource between the CTF entity and the second R-CHF entity. The first charging request includes charging information, an identifier of a charging resource, and user information. The identifier of the charging resource herein is generated by the second R-CHF entity for the CTF entity.

S803: The first R-CHF entity performs charging anomaly processing, and generates a second charging request.

Because the second R-CHF entity is unreachable, the first R-CHF entity cannot obtain the first charging resource between the CTF entity and the second R-CHF entity from the second R-CHF entity, and cannot obtain a second charging resource between the second R-CHF entity and the primary CHF entity. Therefore, that the first R-CHF entity performs charging anomaly processing includes:
The first R-CHF entity creates a third charging resource based on the identifier of the first charging resource and the user information that are included in the first charging request, uses the identifier of the first charging resource as an identifier of the third charging resource, and performs a charging operation based on the third charging resource and the charging information, for example, opens a first R-CHF charging data record. It should be understood that, opening the first R-CHF charging data record refers to creating the first R-CHF charging data record, for charging data to be written into.

Because the first R-CHF entity cannot obtain the second charging resource between the second R-CHF entity and the primary CHF entity, the first R-CHF entity generates the second charging request. The second charging request is used to request to create the converged charging session between the first R-CHF entity and the primary CHF entity. The second charging request includes the charging information and a user identifier that are in the first charging request. Optionally, the second charging request further includes capability information determined by the first R-CHF entity. The capability information represents a capability used for interaction between the primary CHF entity and the first R-CHF entity. The capability information is determined by the first R-CHF entity based on capability information supported by the CTF entity. The capability information supported by the CTF entity herein is capability information that is provided by the CTF entity and that can be used for interaction between the first R-CHF entity and the CTF entity.

The capability information determined by the first R-CHF entity includes at least one of a payload size of a charging message that is supported by the first R-CHF entity and that is used for the second charging resource, idle duration in collection of charging information by the first R-CHF entity for the second charging resource, or a charging characteristic.

The capability information supported by the CTF entity includes at least one of a payload size of a charging message that is supported by the CTF entity and that is used for the first charging resource, idle duration in collection of charging information by the CTF entity for the first charging resource, or a charging characteristic.

S804: The first R-CHF entity sends the second charging request to the primary CHF entity.

S805: The primary CHF entity performs charging processing.

Specifically, the primary CHF determines an existing charging resource (namely, an identifier of a charging resource allocated by the primary CHF to the second R-CHF to perform charging on the user) based on information such as the user identifier and a charging ID in the second charging request, performs charging processing (for example, granting a quota, deducting quota usage, and writing into a primary CHF charging data record), and returns the identifier of the existing charging resource.

It should be understood that, each user has a respective charging resource, the second charging request includes the user identifier, and a charging resource corresponding to the second charging request refers to a charging resource corresponding to a user indicated by the user identifier in the second charging request.

S806: The primary CHF entity sends a second charging response message to the first R-CHF entity.

The second charging response message is in response to the second charging request. The second charging response message includes a charging processing result and an identifier of the charging resource corresponding to the second charging request.

S807: The first R-CHF entity generates a first charging response message.

The first charging response message includes content and trigger configuration information that are included in the second charging response message. The trigger configuration information includes a trigger condition for reporting the charging information, for example, whether the charging information is reported, whether the reporting of the charging information is delayed, and performing reporting when a parameter value of the charging information meets a preset value.

S808: The first R-CHF entity sends the first charging response message to the CTF entity.

S809: The CTF entity processes a service based on the first charging response message.

Specifically, when the charging processing result is a charging failure, the CTF entity retransmits the charging information or ends the service. When the charging processing result is a charging success, the CTF entity continues to collect offline one-time event charging information, online charging information, and the like.

Optionally, after the first R-CHF entity detects that the second R-CHF entity is restored, the first R-CHF entity sends a charging resource migration notification to the second R-CHF entity, to indicate the second R-CHF entity to delete the locally stored first charging resource of the user that is generated for the CTF.

When the charging session has been established between the CTF entity and the second R-CHF entity and the charging session has been established between the first R-CHF entity and the primary CHF entity, and when an anomaly occurs in interaction between the first R-CHF entity and the second R-CHF entity, charging processing can be normally performed through the foregoing processing.

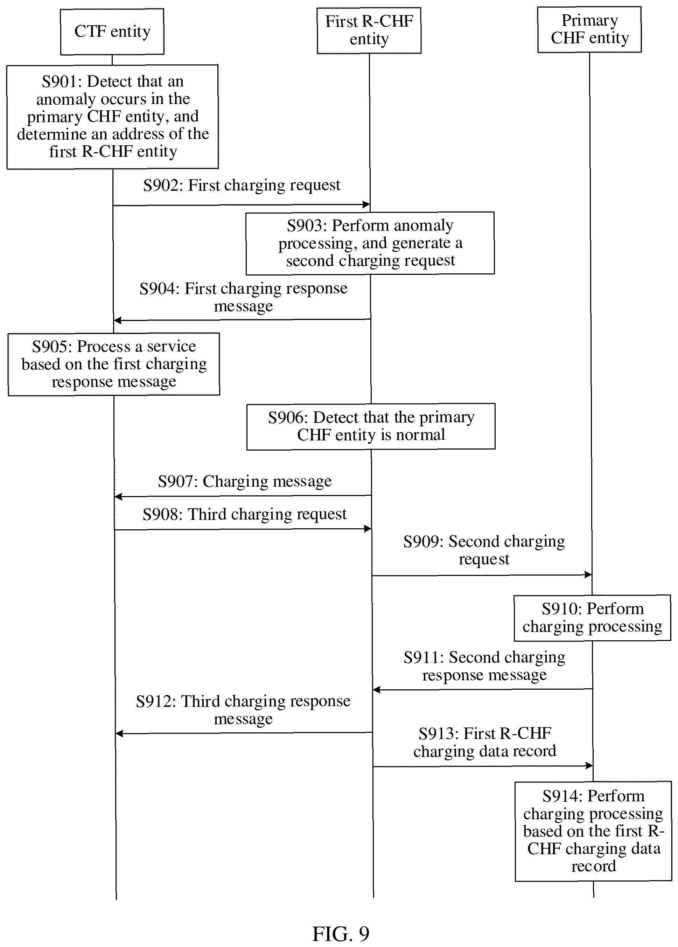

FIG. 9 is a schematic interaction flowchart of another charging anomaly processing method according to an embodiment of this application. The embodiment shown in FIG. 9 is for a scenario in which a charging session has been established between a CTF entity and a primary CHF entity. As shown in FIG. 9, the method includes the following steps.

S901: The CTF entity detects that an anomaly occurs in the primary CHF entity, and determines an address of a first R-CHF entity.

It should be noted herein that, for a specific implementation process in which the CTF entity detects that the anomaly occurs in the primary CHF entity, refer to related descriptions of S501. Details are not described herein again. For a specific process in which the CTF entity determines the first R-CHF entity, refer to related descriptions of S801. Details are not described herein again.

S902: The CTF entity sends a first charging request to the first R-CHF entity.

The first charging request is a first charging resource creation request, and is used to request to create a first charging resource for charging interaction between the CTF entity and the first R-CHF entity. The first charging request includes related information of a charging resource generated by the primary CHF entity for the CTF entity, and the related information of the charging resource is used by the first R-CHF to send a second charging request to the primary CHF.

S903: The first R-CHF entity performs charging anomaly processing, and generates the second charging request.

That the first R-CHF entity performs charging anomaly processing includes:
The first R-CHF entity generates, based on the first charging request, an identifier of the first charging resource for charging interaction between the CTF entity and the first R-CHF entity.

Because the anomaly occurs in the primary CHF entity and the primary CHF entity is unreachable, the first R-CHF entity performs charging anomaly processing. For a specific process, refer to related descriptions in S602 that charging information includes charging information without quota management and that charging information includes charging information with quota management and without an available quota. Details are not described herein again.

S904: The first R-CHF entity sends a first charging response message to the CTF entity.

The first charging response message is in response to the first charging request. Optionally, if the CTF entity supports a quota suspension management capability, the first charging response message further includes quota suspension indication information, where the quota suspension indication information indicates the CTF entity to continue a service based on a quota suspension management mode. If the first R-CHF entity performs a quota granting operation, the first charging response message further includes a quota granted by the first R-CHF entity. Optionally, if the first R-CHF allocates a new identifier of a charging resource to the generated first charging resource, to replace an identifier of the charging resource included in the first charging request, the first charging response message further includes the new identifier of the charging resource.

S905: The CTF entity processes the service based on the first charging response message.

Processing the service includes collecting offline one-time event charging information. Optionally, if the first charging response message includes quota suspension indication information, the CTF collects online quota usage for quota suspension. Optionally, when the first charging response message includes the quota granted by the first R-CHF entity, the CTF entity monitors a use condition of the granted quota.

S906: The first R-CHF entity detects that the primary CHF entity is normal.

After detecting that the primary CHF entity is normal, the first R-CHF entity gradually resumes sending based on a congestion control mechanism, to avoid forming new congestion.

S907: The first R-CHF entity sends a charging message to the CTF entity.

The charging message indicates the CTF entity to restore the suspended quota management. Optionally, the charging message is sent in a charging notification message or a charging response. It should be understood that, the charging notification message is actively sent by the first R-CHF entity to the CTF entity. The charging message is sent in the charging response, which means that the charging message is carried in the charging response sent by the first R-CHF entity to the CTF entity.

S908: The CTF entity sends a third charging request to the first R-CHF entity.

The first charging request is used for a quota request, and the third charging request includes a quota amount that is applied for. Optionally, the third charging request further includes usage of a quota during quota suspension.

S909: The first R-CHF entity sends the second charging request to the primary CHF entity.

The second charging request is a third charging resource update request or a third charging resource release request, and is used to request to update or release a third charging resource for charging interaction between the CTF entity and the primary CHF entity. The second charging request may further include charging information cached in the first R-CHF entity, namely, the charging information and a corresponding quota suspension identifier or a corresponding quota consumption identifier. If the first R-CHF entity receives the third charging request that is sent by the CTF entity after the CTF entity restores quota suspension management, the second charging request further includes the quota request and the usage that are carried in the third charging request.

Optionally, the second charging request further includes capability information sent by the first R-CHF entity. The capability information includes at least one of a payload size of a charging message that is supported by the first R-CHF entity and that is used for a second charging resource, second idle duration in collection of charging information by the first R-CHF entity for the second charging resource, or a second charging characteristic.

Because the primary CHF entity is unreachable, the first R-CHF entity needs to obtain an address of the primary CHF entity, to interact with the primary CHF entity.

It should be noted herein that, for a specific process in which the first R-CHF entity determines the address of the primary CHF entity, refer to related content in S508. Details are not described herein again.

S910: The primary CHF entity performs charging processing.

Specifically, the second charging request includes the charging information cached in the first R-CHF entity. If the cached charging information includes the charging information and the corresponding quota suspension identifier, the primary CHF entity directly deducts, based on the charging information corresponding to the quota suspension identifier, service usage in the charging information from an account balance corresponding to the second charging resource. If the cached charging information includes the charging information and the corresponding quota consumption identifier, the primary CHF entity deducts, based on the charging information corresponding to the quota consumption identifier, the charging information from an account balance corresponding to the second charging resource, and releases a locked quota. If the charging information cached in the first R-CHF entity includes offline service usage, the primary CHF entity writes the offline service usage into a primary CHF charging data record. Optionally, if the second charging request includes the quota amount that is applied for, the primary CHF entity performs quota granting based on the quota amount that is applied for.

S911: The primary CHF entity sends a second charging response message to the first R-CHF entity.

Optionally, when the second charging request is a charging resource creation request, the second charging response message includes an identifier of a charging resource bound to the second charging request. Optionally, the second charging response message further includes capability information fed back by the primary CHF entity.

The capability information fed back by the primary CHF entity includes at least one of the payload size of the charging message for the second charging resource, idle duration in collection of the charging information by the first R-CHF entity for the second charging resource, a third charging characteristic, or a second charging resource trigger condition setting. The trigger condition setting includes a trigger condition for reporting the charging information, for example, whether the charging information is reported, whether the reporting of the charging information is delayed, and performing reporting when a parameter value of the charging information meets a preset value.

S912: The first R-CHF entity sends a third charging response message to the CTF entity.

The third charging response message includes content in the second charging response message and content supplemented or modified by the first R-CHF entity, for example, trigger configuration information.

S913: The first R-CHF entity sends a cached first R-CHF charging data record to the primary CHF entity.

S914: The primary CHF entity performs charging processing based on the first R-CHF charging data record.

It should be noted herein that, for a specific implementation process of S913 and S914, refer to related descriptions in S510 to S513. Details are not described herein again.

It should be noted herein that, S907, S908, and S912 are optional steps. Optionally, S907 and S908 are performed before S909 to S912; or S909 to S911 are directly performed. There is no specific sequence between performing S909 to S911 and performing S913 and S914. Optionally, S909 to S911 are performed before S913 and S914; or S913 and S914 are performed before S909 to S911; or S909 to S911 as well as S913 and S914 are simultaneously performed.

When the charging session has been established between the CTF entity and the primary CHF entity, and when an anomaly occurs in interaction between the first R-CHF entity and the primary CHF entity, charging processing can be normally performed through the foregoing processing.

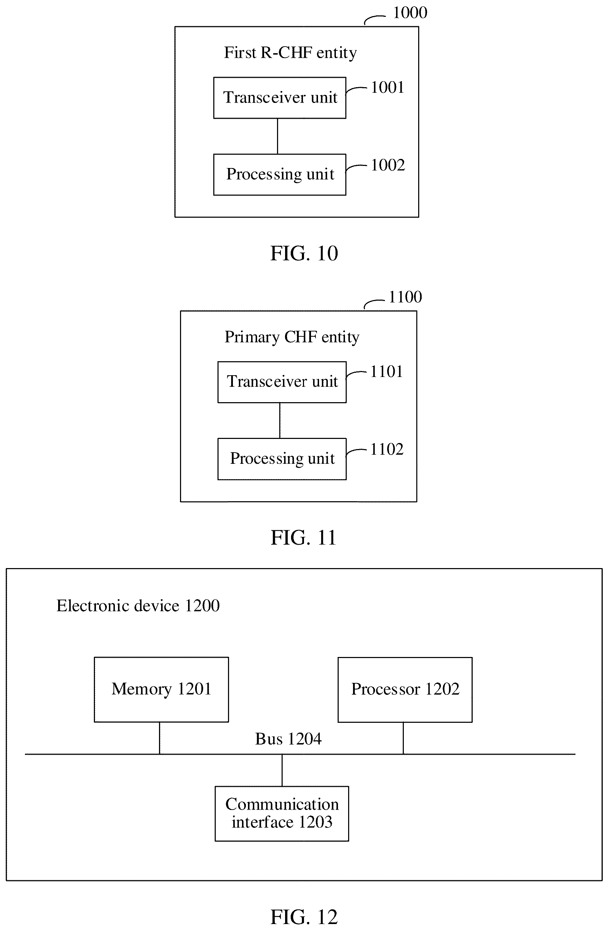

FIG. 10 is a diagram of a structure of a first R-CHF entity according to an embodiment of this application. The first R-CHF entity is the R-CHF entity 202 in FIG. 2. As shown in FIG. 10, the first R-CHF entity 1000 includes a transceiver unit 1001 and a processing unit 1002.

The transceiver unit 1001 is configured to receive a first charging request sent by a CTF entity.

The processing unit 1002 is configured to detect that an anomaly occurs in interaction with a target CHF entity related to the first charging request, and perform charging anomaly processing.

The target CHF entity is a primary CHF entity or a second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

With reference to the third aspect, in a possible implementation, the target CHF entity is a primary CHF entity corresponding to the first charging request, the first charging request is a charging resource creation request for creating a converged charging session, and is used to request to create a charging interaction session between the CTF entity and the first R-CHF entity, and the processing unit 1002 is specifically configured to:
generate a first charging resource for charging interaction between the CTF entity and the first R-CHF entity; and cache charging information in the first charging request; and
the transceiver unit is further configured to send a first charging response message in response to the first charging request to the CTF entity, where the first charging response message includes an identifier of the first charging resource.

With reference to the third aspect, in a possible implementation, if the first charging request includes a quota request, the first response message includes quota suspension indication information or a granted quota, and the quota suspension indication information indicates the CTF entity to continue a service based on a quota suspension management mode.

With reference to the third aspect, in a possible implementation, the first charging response message includes the granted quota, usage of the granted quota is received from the CTF entity, and the cached charging information includes a quota suspension identifier corresponding to the usage of the granted quota.

With reference to the third aspect, in a possible implementation, in an aspect of caching the charging information in the first charging request, the processing unit 1002 is specifically configured to:
write the charging information in the first charging request into a first R-CHF charging data record or store the charging information in the first charging request in the first charging resource.

With reference to the third aspect, in a possible implementation, the transceiver unit 1001 is further configured to:
when detecting that interaction with the target CHF entity related to the first charging request is normal, send a second charging request to the primary CHF entity, where the second charging request is a second charging resource creation request, and is used to request to create a second charging resource for charging interaction between the first R-CHF entity and the primary CHF entity, or the second charging request is a third charging resource update request or a third charging resource release request, and is used to request to update or release a third charging resource for charging interaction between the CTF and the primary CHF entity.

With reference to the third aspect, in a possible implementation, the second charging request carries the cached charging information.

With reference to the third aspect, in a possible implementation, the transceiver unit 1001 is further configured to:
send the first R-CHF charging data record to the primary CHF entity when the processing unit 1002 detects that interaction with the target CHF entity related to the first charging request is normal. The target CHF entity related to the first charging request is the primary CHF entity.

With reference to the third aspect, in a possible implementation,
the transceiver unit 1001 is further configured to: before generating the second charging request, send a notification message to the CTF entity, where the notification message indicates the CTF entity to restore quota management; and receive a third charging request sent by the CTF entity, where the third charging request carries a quota request and usage for restoring quota management, and the second charging request includes the quota request and the usage that are carried in the third charging request.

With reference to the third aspect, in a possible implementation, the target CHF is the primary CHF entity corresponding to the first charging request, the first charging request is a first charging resource update request or a first charging resource release request, and is used to request to update or release the first charging resource for charging interaction between the first R-CHF entity and the CTF entity, and the processing unit 1002 is specifically configured to cache the charging information in the first charging request; and
the transceiver unit 1001 is further configured to send the first charging response message in response to the first charging request to the CTF entity.

With reference to the third aspect, in a possible implementation, if the first charging request includes a quota request, the first response message includes quota suspension indication information or a granted quota, and the quota suspension indication information indicates the CTF entity to continue a service based on a quota suspension management mode.

With reference to the third aspect, in a possible implementation, the cached charging information includes first charging information and a corresponding quota consumption identifier, or second charging information and a corresponding quota suspension identifier, the first charging information is charging information that uses an available quota granted by the primary CHF entity in the charging information, and the second charging information is charging information that does not use an available quota granted by the primary CHF entity in the charging information.

With reference to the third aspect, in a possible implementation, in an aspect of caching the charging information in the first charging request, the processing unit 1002 is further configured to:
write the first charging information and the corresponding quota consumption identifier, or the second charging information and the corresponding quota suspension identifier into a first R-CHF charging data record or store the first charging information and the corresponding quota consumption identifier, or the second charging information and the corresponding quota suspension identifier in the first charging resource.

With reference to the third aspect, in a possible implementation, the transceiver unit 1001 is further configured to:
when detecting that interaction with the target CHF related to the first charging request is normal, send a second charging request to the primary CHF entity, where the second charging request is a second charging resource update request or a second charging resource release request, and is used to request to update or release a second charging resource for charging interaction between the first R-CHF entity and the primary CHF entity.

With reference to the third aspect, in a possible implementation, the transceiver unit 1001 is further configured to:
send the first R-CHF charging data record to the primary CHF entity when the processing unit 1002 detects that interaction with the target CHF related to the first charging request is normal.

With reference to the third aspect, in a possible implementation, the second charging request carries the charging information and the corresponding quota suspension identifier or the corresponding quota consumption identifier.

With reference to the third aspect, in a possible implementation, the transceiver unit 1001 is further configured to:
before generating the second charging request, send a notification message to the CTF entity, where the notification message indicates the CTF entity to restore quota management; and receive a third charging request sent by the CTF entity, where the third charging request carries a quota request and usage for restoring quota management, and the second charging request includes the quota request and the usage that are carried in the third charging request.

With reference to the third aspect, in a possible implementation, the target CHF entity is the primary CHF entity corresponding to the first charging request, the first charging request is a one-time event charging request for online direct deduction or offline one-time event charging, and the processing unit 1002 is further configured to cache the charging information in the first charging request; and
the transceiver unit 1001 is further configured to send the first charging response message in response to the first charging request to the CTF entity.

With reference to the third aspect, in a possible implementation, in an aspect of caching the charging information in the first charging request, the processing unit 1002 is specifically configured to: write the charging information and corresponding online direct deduction indication information or corresponding offline one-time event charging indication information into the first R-CHF charging data record; and
the transceiver unit 1001 is further configured to send the first R-CHF charging data record to the primary CHF entity when detecting that interaction with the target CHF related to the first charging request is normal.

With reference to the third aspect, in a possible implementation, the processing unit 1002 is specifically configured to:
store the charging information in the first charging request and corresponding online direct deduction indication information or corresponding offline one-time event charging indication information in a first charging resource; and
generate the second charging request when detecting that interaction with the target CHF related to the first charging request is normal, where the second charging request is a one-time event charging request, and the second charging request carries the charging information and the corresponding online direct deduction indication information or the corresponding offline one-time event charging indication information; and
the transceiver unit 1001 is further configured to send the second charging request to the primary CHF entity.

With reference to the third aspect, in a possible implementation, the target CHF entity is the second R-CHF entity, the first charging request is a first charging resource update request or a first charging resource release request, and is used to request to update or release a first charging resource for charging interaction between the second R-CHF entity and the CTF entity, and the processing unit 1002 is specifically configured to:
generate a fourth charging resource between the CTF entity and the first R-CHF entity based on the first charging request, and use an identifier of the first charging resource as an identifier of the fourth charging resource; generate the second charging request based on the first charging request, where the second charging request is used to request to create the second charging resource for charging interaction between the first R-CHF entity and the primary CHF entity, and the second charging request carries an identifier of the third charging resource;
the transceiver unit 1001 is further configured to: send the second charging request to the primary CHF entity, and receive a second charging response message in response to the second charging request from the primary CHF entity, where the second charging response message carries an identifier of the second charging resource;
the processing unit 1002 is further configured to generate, based on the second charging response message, a first charging response message in response to the first charging request; and
the transceiver unit 1001 is further configured to send the first charging response message to the CTF entity.

It should be noted that, for a specific function implementation of the first R-CHF entity 1000, refer to the descriptions of the foregoing charging anomaly processing method. For example, the transceiver unit 1001 and the processing unit 1002 are configured to perform related content in S301 and S302. The units or modules in the first R-CHF entity 1000 may be separately or together combined into one or more other units or modules, or one or more units or modules thereof may be further split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

FIG. 11 is a diagram of a structure of a primary CHF entity according to an embodiment of this application. The primary CHF entity provides online quota management and charging data record generation. The primary CHF entity is the primary CHF entity 203 in FIG. 2. The primary CHF entity 1100 includes:
a transceiver unit 1101, further configured to receive related charging information cached in a first R-CHF entity, where the cached related charging information is carried in a charging data record or a charging message, and the cached related charging information includes charging information and a corresponding quota suspension identifier or a corresponding quota consumption identifier; and
a processing unit 1102, configured to perform charging processing based on the quota suspension identifier or the quota consumption identifier.

In a possible implementation, the processing unit 1102 is specifically configured to:
directly deduct service usage in the charging information from an account balance corresponding to a charging resource of the primary CHF entity; and
the processing unit is further configured to:
   if the cached charging information has the corresponding quota consumption identifier, directly deduct the service usage in the charging information from an account corresponding to a first charging resource, and simultaneously release a locked account balance; or
   if the cached charging information includes charging information without quota management, write the charging information without quota management into a primary CHF charging data record.

It should be noted that, for a specific function implementation of the primary CHF entity 1100, refer to the descriptions of the foregoing charging anomaly processing method. For example, the transceiver unit 1101 is configured to perform related content in S401, and the processing unit 1102 is configured to perform related content in S402. The units or modules in the primary CHF entity 1100 may be separately or together combined into one or more other units or modules, or one or more units or modules thereof may be further split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

Based on the descriptions of the foregoing method embodiments and related device embodiments, referring to FIG. 12, an embodiment of the present invention further provides a structural diagram of an electronic device 1200. The electronic device 1200 may be the R-CHF entity 202 or the primary CHF entity 203 that are shown in FIG. 2, the first R-CHF entity 1000 shown in FIG. 10, or the primary CHF entity 1100 shown in FIG. 11. The electronic device 1200 (the electronic device 1200 is specifically a computer device) shown in FIG. 12 includes a memory 1201, a processor 1202, a communication interface 1203, and a bus 1204. A communication connection is implemented between the memory 1201, the processor 1202, and the communication interface 1203 via the bus 1204.

Optionally, the memory 1201 is a read-only memory (Read-Only Memory, ROM), a static storage device, a dynamic storage device, or a random access memory (Random Access Memory, RAM).

The memory 1201 can store a program. When the program stored in the memory 1201 is executed by the processor 1202, the processor 1202 and the communication interface 1203 are configured to perform the steps of the charging anomaly processing method in the embodiment shown in FIG. 3 or FIG. 4.

The processor 1202 is a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to perform a related program, to implement a function that needs to be performed by a unit in an R-CHF entity 202 or a primary CHF entity 203 in embodiments of this application, or perform the charging anomaly processing method in method embodiments of this application.

The processor 1202 may alternatively be an integrated circuit chip and has a signal processing capability. In an implementation process, steps of the charging anomaly processing method in this application can be completed through an integrated logic circuit of hardware in the processor 1202 or instructions in a form of software. Optionally, the processor 1202 is a general-purpose processor, a digital signal processor (Digital Signal Processor, DSP), an ASIC, a field programmable gate array (Field Programmable Gate Array, FPGA) or another programmable logic device, a discrete gate or a transistor logic device, or a discrete hardware component. The processor 1202 can implement or perform the methods, the steps, and logical block diagrams that are disclosed in embodiments of this application. The general-purpose processor is a microprocessor, or the processor is any conventional processor. The steps in the methods disclosed with reference to embodiments of this application can be directly performed and completed by a hardware decoding processor, or can be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 1201. The processor 1202 reads information in the memory 1201, and completes, in combination with hardware of the processor 1202, functions that need to be performed by units included in the R-CHF entity 202 or the primary CHF entity 203 in embodiments of this application, or performs the charging anomaly processing method in the embodiment shown in FIG. 3 or FIG. 4.

The communication interface 1203 uses a transceiver apparatus, for example but not limited to, a transceiver, to implement communication between the electronic device 1200 and another device or a communication network.

The bus 1204 may include a channel for transferring information between various components (for example, the memory 1201, the processor 1202, and the communication interface 1203) of the electronic device 1200.

It should be noted that, although only the memory, the processor, and the communication interface of the electronic device 1200 shown in FIG. 12 are illustrated, in a specific implementation process, a person skilled in the art should understand that, the electronic device 1200 further includes other components necessary for a normal operation. In addition, based on a specific requirement, a person skilled in the art should understand that, the electronic device 1200 may further include hardware components for implementing other additional functions. In addition, a person skilled in the art should understand that the electronic device 1200 may also include only components for implementing embodiments of this application, but not necessarily include all the components shown in FIG. 12.

An embodiment of this application further provides a chip. The chip includes a processor and a data interface. The processor reads, via the data interface, instructions stored in a memory, to implement the charging anomaly processing method in embodiments of this application.

Optionally, in an implementation, the chip further includes the memory, the memory stores the instructions, and the processor is configured to perform the instructions stored in the memory. When the instructions are executed, the processor is configured to perform the charging anomaly processing method.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

A person skilled in the art can appreciate that functions described with reference to various illustrative logical blocks, modules, and algorithm steps disclosed and described in this specification may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium like a data storage medium, or may include any communication medium that facilitates transmission of a computer program from one place to another place (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example but not limitation, such computer-readable storage media include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that, the computer-readable storage medium and the data storage medium do not include connections, carriers, signals, or other transitory media, but actually mean non-transitory tangible storage media. Disks and discs used in this specification include a compact disc (compact disc, CD), a laser disc, an optical disc, a digital versatile disc (digital video disc, DVD), and a Bluray disc. The disks usually reproduce data magnetically, whereas the discs reproduce data optically by using lasers. Combinations of the above should also be included within the scope of the computer-readable medium.

The instructions may be executed by one or more processors, such as one or more DSPs, general-purpose microprocessors, ASICs, FPGAs, or other equivalent integrated or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

In the several embodiments provided in this application, it should be understood that, the disclosed system, apparatus, and method may be implemented in other manners. For example, division into the units is merely logical function division and may be another division in actual implementation. For example, a plurality of units or assemblies may be combined or integrated into another system, or some features may be ignored or not performed. Optionally, the displayed or discussed mutual couplings or direct couplings or communication connections are implemented through some interfaces. The indirect couplings or communication connections between the apparatuses or units are implemented in electronic, mechanical, or other forms.

Optionally, the units described as separate components may or may not be physically separate, and parts displayed as units may be or may not be physical units, may be located at one position, or may be distributed on a plurality of network units. Some or all of the units may be selected based on actual requirements to achieve the objectives of the solutions of embodiments.

All or some of the foregoing embodiments may be implemented using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A charging anomaly processing method, applied to a first relay charging function R-CHF entity, wherein the method comprises:
receiving a first charging request sent by a charging trigger function CTF entity; and
determining that an anomaly occurs in interaction with a target CHF entity related to the first charging request, and performing charging anomaly processing, wherein the target CHF entity is a primary CHF entity or a second R-CHF entity, and the primary CHF entity provides online quota management and charging data record generation; and the second R-CHF entity is a CHF entity that provides a relay for the CTF entity and the primary CHF entity before the first R-CHF entity serves as a relay CHF entity.

2. The method according to claim 1, wherein when the target CHF is the primary CHF entity, the first charging request is a first charging resource creation request, and is used to request to create a first charging resource for charging interaction between the CTF entity and the first R-CHF entity, and performing charging anomaly processing comprises:
generating the first charging resource for charging interaction between the CTF entity and the first R-CHF entity;
caching charging information in the first charging request; and
sending a first charging response message in response to the first charging request to the CTF entity, wherein the first charging response message comprises an identifier of the first charging resource.

3. The method according to claim 2, wherein if the first charging request comprises a quota request, the first response message comprises quota suspension indication information or a granted quota, and the quota suspension indication information indicates the CTF entity to continue a service based on a quota suspension management mode.

4. The method according to claim 3, wherein
when the first charging response message comprises the granted quota, and usage of the granted quota is received from the CTF entity, the cached charging information comprises a quota suspension identifier corresponding to the usage.

5. The method according to any one of claims 2 to 4, wherein caching the charging information in the first charging request comprises:
writing the charging information into a first R-CHF charging data record or storing the charging information in the first charging resource.

6. The method according to any one of claims 2 to 5, wherein the method further comprises:
when detecting that interaction with the target CHF entity related to the first charging request is normal, sending a second charging request to the primary CHF entity, wherein the second charging request is a second charging resource creation request, and is used to request to create a second charging resource for charging interaction between the first R-CHF entity and the primary CHF entity, or the second charging request is a third charging resource update request or a third charging resource release request, and is used to request to update or release a third charging resource for charging interaction between the CTF entity and the primary CHF entity.

7. The method according to claim 5 or 6, wherein the method further comprises:
sending the first R-CHF charging data record to the primary CHF entity when detecting that interaction with the target CHF entity related to the first charging request is normal.

8. The method according to claim 6, wherein the second charging request carries the cached charging information.

9. The method according to any one of claims 6 to 8, wherein the method further comprises:
before generating the second charging request, sending a notification message to the CTF entity, wherein the notification message indicates the CTF entity to restore quota management; and
receiving a third charging request sent by the CTF entity, wherein the third charging request carries a quota request and usage for restoring quota management, and the second charging request comprises the quota request and the usage that are carried in the third charging request.

10. The method according to claim 1, wherein the target CHF is the primary CHF entity corresponding to the first charging request, the first charging request is a first charging resource update request or a first charging resource release request, and is used to request to update or release a first charging resource for charging interaction between the first R-CHF entity and the CTF entity, and performing charging anomaly processing comprises:
caching charging information in the first charging request; and
sending a first charging response message in response to the first charging request to the CTF entity.

11. The method according to claim 10, wherein if the first charging request comprises a quota request, the first response message comprises quota suspension indication information or a granted quota, and the quota suspension indication information indicates the CTF entity to continue a service based on a quota suspension management mode.

12. The method according to claim 10 or 11, wherein the cached charging information comprises first charging information and a corresponding quota consumption identifier, or second charging information and a corresponding quota suspension identifier, the first charging information is charging information that uses an available quota granted by the primary CHF entity in the charging information, and the second charging information is charging information that does not use an available quota granted by the primary CHF entity in the charging information.

13. The method according to claim 12, wherein caching the charging information in the first charging request comprises:
writing the first charging information and the corresponding quota consumption identifier, or the second charging information and the corresponding quota suspension identifier into a first R-CHF charging data record or storing the first charging information and the corresponding quota consumption identifier, or the second charging information and the corresponding quota suspension identifier in the first charging resource.

14. The method according to any one of claims 10 to 13, wherein the method further comprises:
when detecting that interaction with the target CHF related to the first charging request is normal, sending a second charging request to the primary CHF entity, wherein the second charging request is a second charging resource update request or a second charging resource release request, and is used to request to update or release a second charging resource for charging interaction between the first R-CHF entity and the primary CHF entity.

15. The method according to claim 13 or 14, wherein the method further comprises:
sending the first R-CHF charging data record to the primary CHF entity when detecting that interaction with the target CHF related to the first charging request is normal.

16. The method according to claim 14, wherein the second charging request carries the charging information and the corresponding quota suspension identifier or the corresponding quota consumption identifier.

17. The method according to claim 14, wherein the method further comprises:
before generating the second charging request, sending a notification message to the CTF entity, wherein the notification message indicates the CTF entity to restore quota management; and
receiving a third charging request sent by the CTF entity, wherein the third charging request carries a quota request and usage for restoring quota management, and the second charging request comprises the quota request and the usage that are carried in the third charging request.

18. The method according to claim 1, wherein the target CHF entity is the primary CHF entity corresponding to the first charging request, the first charging request is a one-time event charging request for online direct deduction or offline one-time event charging, and performing charging anomaly processing comprises:
caching charging information in the first charging request; and
sending a first charging response message in response to the first charging request to the CTF entity.

19. The method according to claim 18, wherein caching the charging information in the first charging request comprises:
writing the charging information and corresponding online direct deduction indication information or corresponding offline one-time event charging indication information into a first R-CHF charging data record; and
the method further comprises:
sending the first R-CHF charging data record to the primary CHF entity when detecting that interaction with the target CHF related to the first charging request is normal.

20. The method according to claim 18, wherein caching the charging information in the first charging request comprises:
storing the charging information and corresponding online direct deduction indication information or corresponding offline one-time event charging indication information in a first charging resource; and
the method further comprises:
sending a second charging request to the primary CHF entity when detecting that interaction with the target CHF related to the first charging request is normal, wherein the second charging request is a one-time event charging request, and the second charging request carries the charging information and the corresponding online direct deduction indication information or the corresponding offline one-time event charging indication information.

21. The method according to claim 1, wherein the target CHF entity is the second R-CHF entity, the first charging request is a first charging resource update request or a first charging resource release request, and is used to request to update or release a first charging resource for charging interaction between the second R-CHF entity and the CTF entity, and performing charging anomaly processing comprises:
generating a fourth charging resource between the CTF entity and the first R-CHF entity based on the first charging request, and using an identifier of the first charging resource as an identifier of the fourth charging resource;
generating a second charging request based on the first charging request, and sending the second charging request to the primary CHF entity, wherein the second charging request is used to request to create a second charging resource for charging interaction between the first R-CHF entity and the primary CHF entity, and the second charging request carries an identifier of a third charging resource;
receiving a second charging response message in response to the second charging request from the primary CHF entity; and generating, based on the second charging response message, a first charging response message in response to the first charging request, wherein the second charging response message carries an identifier of the second charging resource; and
sending the first charging response message to the CTF entity.

22. A charging anomaly processing method, wherein the method is applied to a primary charging function CHF entity, the primary CHF entity provides online quota management and charging data record generation, and the method comprises:
receiving related charging information cached in a first R-CHF entity, wherein the cached related charging information is carried in a charging data record or a charging message, and the cached related charging information comprises charging information and a corresponding quota suspension identifier or a corresponding quota consumption identifier; and
performing charging processing based on the quota suspension identifier or the quota consumption identifier.

23. The method according to claim 22, wherein performing charging processing based on the quota suspension identifier or the quota consumption identifier comprises:
directly deducting service usage in the charging information from an account balance corresponding to a charging resource of the primary CHF entity; and
the method further comprises:
if the cached charging information has the corresponding quota consumption identifier, directly deducting the service usage in the charging information from an account corresponding to a second charging resource, and simultaneously releasing a locked account balance; or
if the cached charging information comprises charging information without quota management, writing the charging information without quota management into a primary CHF charging data record.

24. A charging anomaly processing method, wherein the method is applied to a charging system, the charging system comprises a first relay charging function R-CHF entity, a second R-CHF entity, a charging trigger function CTF entity, and a primary CHF entity, and the method further comprises:
sending, by the CTF entity, a first charging request to the first R-CHF entity; and
determining, by the first R-CHF entity, that an anomaly occurs in interaction with a target CHF entity related to the first charging request, and performing charging anomaly processing, wherein
the target CHF entity is the primary CHF entity or the second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

25. A charging system, wherein the charging system comprises a first relay charging function R-CHF entity, a second R-CHF entity, a charging trigger function CTF entity, and a primary CHF entity, wherein
the CTF entity is configured to send a first charging request to the first R-CHF entity; and the first R-CHF entity is configured to: determine that an anomaly occurs in interaction with a target CHF entity related to the first charging request, and perform charging anomaly processing, wherein
the target CHF entity is the primary CHF entity or the second R-CHF entity, the primary CHF entity provides online quota management and charging data record generation, and the second R-CHF entity is a CHF entity that provides a relay for the CTF entity and the primary CHF entity before the first R-CHF entity serves as a relay CHF entity.

26. A first relay charging function R-CHF entity, comprising a functional unit configured to implement the method according to any one of claims 1 to 21.

27. A primary charging function CHF entity, comprising a functional unit configured to implement the method according to either of claims 22 and 23.

28. A first relay charging function R-CHF entity, comprising a processor and a memory, wherein the memory is configured to store program code, and the processor is configured to perform the program code, to implement the method according to any one of claims 1 to 21.

29. A home charging function CHF entity, comprising a processor and a memory, wherein the memory is configured to store program code, and the processor is configured to perform the program code, to implement the method according to either of claims 22 and 23.

30. A computer-readable storage medium, wherein the computer-readable storage medium stores a computer program; and when the computer program is executed by a processor, the method according to any one of claims 1 to 23 is implemented.
